# EUROPEAN PATENT APPLICATION

(11) **EP 4 807 231 A1**
(43) Date of publication of application: **16.09.2026**
(21) Application number: 26163846.4
(22) Date of filing: 11.03.2026
(51) Int. Cl.: F16L 55/172

(54) **KIT FOR REPAIRING A DAMAGED PIPE FOR FLUIDS AND RELATED REPAIRING METHOD**

(30) Priority: 12.03.2025 IT 202500005054
(71) Applicant: A2A Life Ventures S.r.l., 20122 Milano (IT); Composite Research S.r.l., 10064 Pinerolo (Torino) (IT)
(72) Inventor: Giulietti, Nicola, I-53043 Chiusi (SI) (IT); Fossat, Eugenio, I-10064 Pinerolo (TO) (IT); Orio, Roberto, I-10141 Torino (TO) (IT)
(74) Representative: Porta & Consulenti Associati S.p.A.

(57) **Abstract**

The present invention relates to a kit (10) and to a method for repairing a damaged pipe (90) for fluids. The kit (10) comprises a flexible gasket sheet (20), made of an elastomeric material, which is configured for application to an outer surface (91) of the pipe (90) to cover a damaged portion of the pipe; a flexible support and tensioning band (30), configured to be associated to the flexible gasket sheet (20) and a group (15) for closing the kit and tensioning the flexible support and tensioning band (30). The closing and tensioning group (15) comprises a first elongated element (40) and a second elongated element (50) comprising an elongated body (41, 51) and tightening members (70) configured to be associated to the first (40) and to the second elongated element (50) and to bring the first (40) and the second elongated element (50) closer to one another by tensioning said flexible support and tensioning band (30). The flexible support and tensioning band (30) comprises an interaction section (33a) with the flexible gasket sheet (20), and a connection section (33b, 33c) with the elongated elements (40, 50). The flexible support and tensioning band (30) comprises at least one layer made of a composite material comprising a thermoplastic or thermosetting polymer matrix, having a compressive elastic modulus, measured according to ASTM D695, comprised between 0.3 GPa and 6 GPa, in which continuous or long reinforcing fibres are embedded having a tensile modulus of elasticity, measured according to ASTM C1557, greater than, or equal to, 20 GPa.

## Description

### Field of the invention

The present invention relates to a kit for repairing a damaged pipe for fluids on site. In non-limiting examples, such a pipe for fluids is a pressure pipe for the distribution of gas or liquids such as mains water or oil.

The present invention also relates to a method for repairing on site a damaged pipe for fluids.

### Background of the invention

As is well known, in the field of distribution networks, both underground and above ground, of fluids such as mains water, mains gas or other fluids, a problem inherent in the operation of such networks is that of the formation over time of cracks or lesions in the transport pipes with a related undesirable fluid leak.

These cracks or lesions may be caused by degradation phenomena of the pipe material, such as corrosion in the case of metal pipes, by landslides or subsidence phenomena, or they may be caused by external mechanical actions such as accidental impacts in the case of excavation work in the vicinity of fluid-carrying pipes.

In the field of fluid distribution networks, therefore, the need is greatly felt to provide kits for the on-site repair of damaged pipelines that are easy to use and allow the fluid tightness of the repair to be maintained for as long as possible. This aspect is particularly critical in practice since the sealing element used is generally a rubber sheet, an elastomeric material that tends to develop undesirable relaxation phenomena over time due to the intrinsic characteristics of this material.

Such phenomena are highly undesirable as they result in a progressive reduction over time (months and years) of the pressure exerted on the outer surface of the pipe with the consequent risk of reactivation of the repaired leak.

A further, equally felt need is that of providing a kit for the on-site repair of damaged pipes that can easily adapt to the variety of pipe diameters that may be encountered in practice, thus avoiding the need to keep a large supply of repair kits of different sizes in stock.

A currently popular type of kit for repairing a damaged pipe for fluids on site is the so-called "stainless steel band", i.e. a kit essentially consisting of a rubber sheet (acting as a gasket) that is pressed onto the outer surface of the pipe where the damaged portion to be repaired is located by means of a flexible metal band (mostly stainless steel) in the form of a collar that is wrapped around the pipe and is tensioned by means of appropriate tensioning systems based on screws or bolts.

The metal band has the function of withstanding the traction exerted by the tensioning system, transferring the traction to the rubber sheet in the form of pressure orthogonal to the surface of the pipe so as to ensure an adequate fluid seal.

As part of this type of repair kit for damaged pipes, US 5 219 001 A discloses a clamp comprising a hollow, cylindrical slit compression gasket having axially extending end portions. The end portions define a relatively small, axially extending gap when the gasket is initially installed on a pipe to be repaired. An armour sleeve is mounted on the outside surface of a first portion of the gasket and has axially extending ends arcuately spaced unequal distances from the end faces of the gasket. A clamping band encircles the gasket and the sleeve so that tension applied to the band will exert compressive force on the gasket and sleeve. The band is in contact with a second portion of the gasket when the band and gasket are initially installed on the pipe and out of contact with third and fourth portions of the gasket. The fourth portion of the gasket includes at least one of the end portions which terminate in the end faces so that the gap will be closed and the third and fourth portions will be substantially eliminated when compressive force is exerted by the band.

US 4 365 393 A discloses a low profile pipe clamp for use in encircling a pipe such as a main or the like; the clamp being either a repair clamp or a service clamp with a side outlet. The pipe clamp comprises a flexible band, usually of sheet metal with a gasket material on the interior and having at least a pair of opposed looped ends which receive cylindrical trunnion loading bars. At least one bolt extending through the loading bars is arranged to move the trunnion loading bars toward each other to cause the looped ends of the band to draw the flexible band tightly around the pipe. The relationship of the trunnion loading bars to the bolt extending therethrough is such as to give the clamp a use for a wide range of varying outside diameters of a particular size of pipe. Means are provided for retaining the bolt in one of the loading bars prior to assembly of the clamp on a pipe, and also means are provided for frictionally holding the trunnion loading bars in a predetermined position in the looped ends of the flexible band prior to assembly of the clamp on a pipe but yet let the trunnion loading bars rotate relative the looped ends during assembly.

However, this type of repair kit has a number of drawbacks.

Firstly, the high flexural rigidity of the metal band makes it difficult to open and then close it around the pipe to be repaired and hinders the adjustment of its curvature to adapt to pipes of different diameters. As a result, it is extremely difficult if not impossible to use a single metal band for a range of pipe diameters.

The Applicant has also experimentally observed that the pressure exerted by the stainless steel bands on the outer surface of the pipe may not be homogeneous, also due to deformations that may arise in the metal band as a result of its opening and subsequent closure and which make the curvature of the metal band irregular, even once it has been tensioned around the pipe. In practice, this can create zones where the pressure applied by the metal band is lower than desired, zones that act as a preferential path for fluid loss when the rubber sheet acting as a seal undergoes the inevitable viscoelastic relaxation process.

US 4889167 discloses a device for repairing damaged pipes which comprises a flexible elongate band for encircling the outer diameter of a portion of a pipe or other cylindrical conduit to be repaired. The band is formed by a two-component element, namely by a sealing elastomeric component of an elastomeric material and a tensile component comprised of a material having a high tensile strength and a high modulus of elasticity. The components of the band are joined at a base end which is connected to a one-way lock device. The two components of the band form a loop which encircles the pipe and runs through a slot in the lock device. The lock device captures the band with the tensile component under sufficient tension for compressing the elastomeric component against the pipe, creating the fluid-tight seal.

The tensile component may be a composite material consisting of a web or weft of fibres or cords enclosed or sandwiched within a sheet of an elastomeric material such as natural or synthetic rubbers or, alternatively, of one or more sheets of a high-strength membrane such as Mylar^{®} (registered trademark of polyethylene terephthalate).

Although the device for repairing damaged pipes disclosed by US 4889167 is of an adjustable type, in order to allow the repair of pipes of different diameters, the Applicant has verified that this solution has several disadvantages and limitations.

First of all, the tensile component made of elastomeric material has intrinsic characteristics that, as explained above, can lead to problems when applied in a damaged pipe repair kit, in particular poor capacity of the matrix to transmit and distribute loads between the reinforcing fibres of the composite material, possible creep of the reinforcing fibres in the matrix, matrix prone to damage that can leave the reinforcing fibres exposed to chemical agents, high deformability of the composite material due to shear stresses, relatively rapid ageing and, last but not least, viscoelastic relaxation that adds to and aggravates that of the sealing component also made of an elastomeric material.

These drawbacks can undermine the strength and ability of such a two-component band to prevent leakage from the pipe, both in the short term and even more so in the long term, particularly when used to repair pipes subjected to high internal pressures (in the order of, say, 10-100 bar) that are often found in pipes transporting water and other fluids. Indeed, in order to prevent leaks in high-pressure pipes, the band of the repair device must apply an equally high pressure to the outer surface of the pipe and is therefore subject to high tensile forces.

Secondly, and due to the multi-layered nature of the flexible band, the device for repairing damaged pipes disclosed by US 4889167 requires the locking and tensioning device that captures and holds the two-component band in place to be made of heavy-weight, robust elements.

In fact, in order to exert a tensile action on the flexible two-component band sufficient to compress the elastomeric sealing component against the pipe, the locking and tensioning device is formed by a series of robust L-shaped metal blocks, welded or cast to a crossbar and opposing one another two by two, and in which respective tension bolts are engaged.

Furthermore, in order to exert a sufficient tensile action on the flexible two-component band, the unidirectional locking device disclosed by US 4889167 also includes a cam element in the form of a plate or drop-shaped bar, which is essential to prevent undesirable loosening movements of the band with possible leakage. In particular, the cam element is actuated when the L-shaped metal blocks are brought closer together by the tension bolts and interacts with the two-component band that is passed through a slot formed between the cam element itself and the metal blocks when the pipe is repaired.

The repair kit disclosed by US 4889167 is therefore mechanically complicated, relatively heavy to transport, and can be difficult to assemble and use on site, particularly when repairing underground pipes with limited space to manoeuvre.

### Summary of the invention

One aim of the present invention is that of overcoming the drawbacks described above by providing a kit for repairing a damaged pipe for fluids of simple structure and low weight, which is easy to use and assemble on site and at the same time offers the possibility of adjustment in order to repair pipes of different diameters.

A further aim is that of reducing the drawbacks deriving from the viscoelastic relaxation of the materials used, in particular of the elastomeric sealing element.

In this regard, the Applicant noted that by replacing the metal band with a band including a tensile component made of composite material, such as the one disclosed by US 4889167, the use of a stiffer polymer matrix in the tensile component to overcome the problem of viscoelastic relaxation may lead to strength drawbacks in the composite material.

In fact, an excessively rigid composite material exhibits poor flexibility and brittle behaviour, resulting in limited bending radii and easy cracking and fracture formation even during assembly.

The Applicant has perceived that a significant mechanical simplification of the repair kit and a substantial reduction in its weight and size can be achieved by coupling the locking and tensioning elements of the kit to the tensioning component in such a way that a direct tensile action is exerted only on the tensioning component, which in turn transmits a compressive action on the elastomeric sealing component.

In this way, and by giving the tensile component appropriate characteristics of flexibility and mechanical strength, it is advantageously possible to simplify the structure of the locking device and reduce the overall weight of the kit, while at the same time achieving an optimal sealing action and the desired adaptability to a wide range of pipe diameters to be repaired.

The Applicant has also found that the aforementioned adequate flexibility and mechanical strength characteristics of the tensile component can be achieved by making the latter in the form of a flexible band comprising at least one layer made of a composite material in which continuous or long reinforcing fibres are embedded in a polymer matrix having a compressive elastic modulus falling within a specific range of values.

The present invention therefore relates, in a first aspect thereof, to a kit for repairing a damaged pipe for fluids.

Preferably, the pipe is a pressure pipe for the distribution of mains water.

Preferably, the kit comprises a flexible gasket sheet.

Preferably, the flexible gasket sheet is made of elastomeric material.

Preferably, the flexible gasket sheet is configured for application to an external surface of said pipe to cover a damaged portion of the pipe.

Preferably, the kit comprises a flexible support and tensioning band, configured to be associated to said flexible gasket sheet.

Preferably, the kit comprises a group for closing the kit and tensioning said flexible support and tensioning band.

Preferably, the group for closing the kit and tensioning said flexible support and tensioning band, comprises a first elongated element and a second elongated element.

Preferably, said elongated elements comprise or consist of an elongated body.

Preferably, the group for closing the kit and tensioning said flexible support and tensioning band comprises tightening members configured to be associated to the first and to the second elongated element and to bring the first and the second elongated element closer to one another by tensioning said flexible support and tensioning band.

Preferably, the flexible support and tensioning band comprises an interaction section with said flexible gasket sheet.

Preferably, the flexible support and tensioning band comprises a connection section with said first elongated element and a connection section with said second elongated element.

Preferably, said connection sections each comprise at least one connection zone configured to be associated to said first elongated element and, respectively, to said second elongated element.

Preferably, said flexible support and tensioning band comprises at least one layer made of a composite material comprising a thermoplastic or thermosetting polymer matrix in which reinforcing fibres are embedded.

Preferably, said polymer matrix has a compressive elastic modulus, measured according to ASTM D695, comprised between 0.3 GPa and 6 GPa.

Preferably, the reinforcing fibres are continuous or long fibres.

In this description and subsequent claims, the terms "long fibres" and "continuous fibres" are used with the meaning commonly employed in the technical field of composite materials, i.e. fibres of a length in the order of several centimetres or more.

Within the framework of the invention and with reference to ASTM D3878, the use is therefore excluded of discontinuous fibres and filaments such as "whisker" and "chopped fibre", which have discontinuity within a composite specimen or component, with lengths in the order of 15-20 mm or less.

Preferably, the reinforcing fibres have a tensile modulus of elasticity, measured according to ASTM C1557, greater than, or equal to, 20 GPa.

The Applicant has experimentally verified that a number of advantageous technical effects can be achieved by the provision of an interaction section of the flexible support and tensioning band with the flexible gasket sheet which is separate from the connection section with said elongated elements.

Firstly, an advantageous simplification of the kit locking device formed in this case by a group for closing the kit and tensioning the flexible support and tensioning band, which group directly acts only on the flexible support and tensioning band and not also on the flexible sealing sheet as is required by US 4889167.

Secondly, an advantageous simplification of the adjusting procedures of the kit to a wide range of pipe diameters to be repaired. Thanks to the aforementioned compressive elastic modulus characteristics, in fact, the support and tensioning band has characteristics of flexibility that allow to fold an excess portion of the flexible support and tensioning band around the first elongated element and/or the second elongated element and, if necessary, also to easily wrap this excess portion of the flexible support and tensioning band in one or more turns around the first elongated element and/or the second elongated element. Advantageously, this results in an effective and easy adjustment of the kit to adapt to different pipe diameters.

The Applicant has in fact experimentally found that the aforementioned values of the compressive elastic modulus of the polymer matrix of the flexible support and tensioning band, in combination with reinforcing fibres having the aforementioned high tensile modulus of elasticity, allow to achieve the necessary flexibility characteristics avoiding at the same time brittleness problems with consequent crack initiation and formation of fractures during wrapping around the pipe to be repaired or around the first and/or second elongated element.

The Applicant has also experimentally found that the above-mentioned values of the compressive elastic modulus of the polymer matrix of the flexible support and tensioning band allow to achieve a good load transmission between the reinforcing fibres and a good protection of the reinforcing fibres by the polymer matrix, resulting in optimal tensile and compressive behaviour of the support and tensioning band, as well as good durability.

The Applicant has also experimentally found that the use of continuous or long fibres in the flexible support and tensioning band imparts to the latter the desired mechanical properties as well as helping to reduce creep over time between the reinforcing fibres and the polymer matrix.

Finally, the Applicant has experimentally found that the use of such reinforcing fibres with the aforementioned high tensile modulus of elasticity imparts to the flexible support and tensioning band the desired mechanical characteristics while reducing the occurrence of possible viscoelastic deformation phenomena of the flexible support and tensioning band over time.

In a second aspect thereof, the present invention relates to a method for repairing a damaged pipe for fluids by means of a kit according to the first aspect of the present invention as described herein.

Preferably, the method comprises providing a pre-assembled group comprising said flexible support and tensioning band associated to a first elongated element at a respective connection zone.

Preferably, the method comprises providing a pre-assembled group comprising said flexible gasket sheet associated to a face of said flexible support and tensioning band configured to face, in use, the pipe.

Preferably, the method comprises wrapping around the outer surface of said pipe said flexible support and tensioning band with said flexible gasket sheet associated thereto.

Preferably, the method comprises folding an excess portion of said flexible support and tensioning band around a second elongated element.

Preferably, the method comprises applying an initial traction on the excess portion of said flexible support and tensioning band to adapt a length of the flexible support and tensioning band wrapped around the outer surface of said pipe to an outer diameter of the pipe.

Preferably, the method comprises bringing the first and the second elongated element closer to each other by means of said tightening members, so as to apply a second traction to said flexible support and tensioning band wrapped around the outer surface of said pipe and subjecting to compression the flexible gasket sheet interposed between the flexible support and tensioning band and the pipe.

The method of the present invention uses the kit according to the first aspect of the present invention and thus allows to achieve at least the same advantages mentioned above.

The present invention can, in one or more of its aspects, have one or more of the preferred features given hereinafter, which can be combined with one another as desired according to the application requirements.

Within the framework of the present description and in the following claims, all numerical entities indicating amounts, parameters, percentages and so forth are to be understood as being preceded in all instances by the term "about" unless indicated otherwise.

Moreover, all the ranges of numerical entities are to be understood as extremes included, unless indicated otherwise, and include all the possible combinations of the maximum and minimum numerical values and all the possible intermediate ranges, in addition to those specifically indicated hereinbelow.

Within the framework of the present description and in the following claims, the term "longitudinal" or "transverse" means a direction parallel or, respectively, orthogonal to the prevailing dimension of an element when considered in its plan view.

Preferably, the flexible gasket sheet is made of a suitable elastomeric material, e.g. SBR rubber, EPDM rubber and silicone rubber, in a formulation suitable for contact with the fluid transported in the pipe to be repaired, for example drinking water.

Preferably, the elastomeric material of the flexible gasket sheet has rubber hardness greater than, or equal to, 50 Shore A, more preferably greater than, or equal to, 60 Shore A, and even more preferably greater than, or equal to, 65 Shore A.

In this way, it is advantageously possible to limit the deformation of the flexible gasket sheet during the compression produced by the clamping of elongated elements by the possible pressure of the pressurised fluid (liquid or gas) transported in the pipe to be repaired, and to limit the inevitable relaxation phenomena of the elastomeric material of the flexible gasket sheet over time.

Preferably, the elastomeric material of the flexible gasket sheet has a hardness lower than, or equal to, 100 Shore A, more preferably lower than, or equal to, 95 Shore A, and even more preferably lower than, or equal to, 90 Shore A.

In this way, it is advantageously possible to easily bend the flexible gasket sheet around the pipe and allow the flexible gasket sheet to sufficiently deform to penetrate into cracks and surface irregularities of the pipe which it is applied on, under the force applied by the flexible support and tensioning band.

Preferably, the first interaction section with the flexible gasket sheet and the connection sections with the elongated elements of the flexible support and tensioning band are separate from each other, e.g. defined in several portions, for example adjacent to each other, positioned along the longitudinal extension of the flexible support and tensioning band.

Within the framework of the present invention, the elongated elements of the group for closing the kit and tensioning said flexible support and tensioning band exert the technical effect of distributing the quasi-point force produced by the tightening members (preferably, screws or bolts as will be discussed below) over the entire width of the flexible support and tensioning band, a width which, once the kit is assembled on the pipe to be repaired, is parallel to a longitudinal axis of the pipe itself.

In preferred embodiments, the first elongated element and/or the second elongated element comprises suitable elements for adjusting the length of the flexible support and tensioning band, discussed below.

Preferably, the elongated body of the first elongated element and/or the second elongated element comprises a substantially curvilinear wrapping portion configured to allow the connection section of the flexible support and tensioning band with the first elongated element and/or the second elongated element to be folded over the elongated body or to be wrapped around the elongated body.

Advantageously, this substantially curvilinear wrapping portion allows the connection section of the flexible support and tensioning band to be folded or wrapped on or around the elongated body during the assembly operations of the kit to repair a damaged pipe without damaging the flexible band itself.

Advantageously, the aforementioned substantially curvilinear wrapping portion incorporates a very simple element for adjusting the length of the flexible support and tensioning band useful for repairing the lesion in the pipe.

Adjustment of the length of the flexible support and tensioning band can in fact be achieved by simply wrapping on one or both elongated elements the excess portion of the flexible support and tensioning band not used for the support and tensioning of the gasket sheet.

Preferably, this excess portion of the flexible support and tensioning band is part of the connection section with said first elongated element and/or of the connection section with said second elongated element.

The excess portion of the flexible support and tensioning band therefore does not comprise the interaction section with the flexible gasket sheet. The latter, therefore, does not hinder either the kit's adjustment operations to adapt the length of the flexible support and group for closing the kit and tensioning (15) said flexible support and tensioning band tensioning band to the diameter of the pipe to be repaired, or the tensioning operations of the flexible support and tensioning band.

Preferably, the elongated body of the first and/or second elongated element is cylindrical in cross-section. Even more preferably, the elongated body of the first and/or second elongated element is essentially tubular in shape with a circular cross-section.

In this way, it is advantageously possible to have a kit that is able to fit, by means of an at least partial wrapping, of the connection section with the elongated element of the flexible support and tensioning band on the elongated body of the first elongated element and/or the second elongated element, and that has at the same time a very simple structure and low weight.

In addition, this particular geometric configuration of the elongated elements allows the latter to effectively perform the aforementioned technical effect of distributing the force produced by the tightening means over the entire width of the connection section with the elongated elements of the flexible support and tensioning band.

Preferably, the first and/or second elongated element is made of a suitable structural material, for example steel, preferably stainless steel to better resist corrosion, and/or a suitable composite material, for example fibreglass (glass fibre with thermosetting matrix).

In preferred embodiments, the elongated elements are tubular elongated elements and are made of spring steel or high-strength steel.

In this way, the elongated elements can undergo elastic deformation when the tightening members of the group for closing the kit and tensioning the flexible support and tensioning band are operated and, therefore, advantageously perform the function of a compression spring, which allows to reduce the problems associated to possible loosening phenomena of the flexible support and tensioning band resulting from relaxation of the elastomeric gasket sheet, thereby keeping the elongated elements tightly clamped together even over time.

Preferably, said polymer matrix of said at least one layer of the flexible support and tensioning band has a compressive elastic modulus, measured according to ASTM D695, comprised between 0.5 GPa and 4.5 GPa, more preferably, comprised between 0.7 GPa and 3 GPa.

In this way, it is advantageously possible to optimise the aforementioned flexibility characteristics of the support and tensioning band, avoiding brittleness problems with consequent crack initiation and fracture formation when wrapping around the pipe to be repaired, as well as load transmission between the reinforcing fibres and protection of the reinforcing fibres by the polymer matrix.

In a possible preferred embodiment, said polymer matrix may be a thermoplastic polymer matrix comprising or consisting of one or more of the following materials: polypropylene (PP), polyethylene (PE), in particular high density or medium density polyethylene (HDPE, MDPE), polyethylene terephthalate (PET), acrylonitrile-butadiene-styrene (ABS), polycarbonate (PC), polyamide (PA), polysulphone (PSU).

In a further possible preferred embodiment, the polymer matrix can be a thermosetting polymer matrix comprising or consisting of an epoxy resin or an unsaturated polyester resin.

In preferred embodiment, the epoxy resin can contain suitable additives such as, for example, elasticising or plasticising additives.

Preferably, said reinforcing fibres have a tensile modulus of elasticity, measured according to ASTM C1557, greater than, or equal to, 40 GPa, more preferably, greater than, or equal to, 50 GPa.

Advantageously, it is in this way optimised the aforementioned technical effect of imparting the desired mechanical characteristics to the flexible support and tensioning band while reducing the occurrence of possible viscoelastic deformation phenomena of the flexible support and tensioning band over time.

Preferably, said reinforcing fibres have a tensile modulus of elasticity, measured according to ASTM C1557, lower than, or equal to, 1500 GPa, more preferably lower than, or equal to, 800 GPa and, even more preferably, lower than, or equal to, 500 GPa.

Advantageously, it is in this way avoided or minimised the possible occurrence of brittleness problems of the reinforcing fibres and thus of the flexible support and tensioning band.

Preferably, said reinforcing fibres are glass fibres or fibres of Ultra-High Molecular Weight Polyethylene (UHMWPE).

Advantageously, these fibres do not suffer significant degradation over time in the presence of wet environments such as the subsoil in which the pipes may be placed.

Preferably, said at least one layer made of a composite material comprising a thermoplastic or thermosetting polymer matrix has a thickness comprised between 0.1 mm and 2.5 mm, more preferably between 0.2 mm and 2 mm, and even more preferably between 0.3 mm and 1.5 mm.

In this respect, it is noted that minor areas, e.g. at the opposite transversal ends, may be present where the thickness may be outside of these ranges.

The Applicant has experimentally found that the above-mentioned layer thickness values made of a composite material advantageously ensure both an adequate flexibility to the flexible support and tensioning band and an adequate mechanical resistance to the stresses present during installation and use.

In preferred embodiments, the flexible support and tensioning band as a whole has a thickness comprised between 0.1 mm and 6 mm, more preferably between 0.2 mm and 4 mm, even more preferably between 0.3 and 2 mm.

The Applicant has experimentally found that the above-mentioned thickness values of the flexible support and tensioning band advantageously ensure both an adequate flexibility and a suitable mechanical resistance to the stresses of the flexible support and tensioning band during installation and use.

In preferred embodiments, the flexible support and tensioning band can be single-layer or multi-layer.

In a particularly preferred embodiment, the flexible support and tensioning band comprises a first plurality of reinforcing fibres, preferably parallel to each other, embedded in said polymer matrix and obliquely oriented at least in part with respect to a longitudinal axis of the flexible support and tensioning band and a second plurality of reinforcing fibres preferably parallel to each other, embedded in said polymer matrix and obliquely oriented at least in part with respect to the longitudinal axis of the flexible support and tensioning band with an inclination opposite to that of the first plurality of reinforcing fibres.

Preferably, the aforementioned reinforcing fibres are oriented obliquely with respect to a longitudinal axis of the flexible support and tensioning band, with opposite inclination, by an angle comprised between 10° and 60°, more preferably by an angle comprised between 15° and 55°, and even more preferably by an angle comprised between 25° and 50°.

Preferably, said first plurality of reinforcing fibres and said second plurality of reinforcing fibres are threads or fibres of a so-called "crossed fibre" fabric embedded in said polymer matrix.

Advantageously, this reinforcement configuration of the flexible support and tensioning band helps to effectively and evenly distribute the stresses generated in the composite layer as a result of clamping around the pipe.

The Applicant has in fact experimentally verified that a flexible support and tensioning band comprising crossed fibres embedded in the polymer matrix is very effective in distributing the stresses directed against the support and tensioning band over a large surface of the composite material in the area corresponding to the damaged area of the pipe, where the fluid exits the pipe very often at high pressure.

The Applicant has experimentally verified that this stress distribution prevents possible breaks of the reinforcing fibres in the most stressed area and a consequent chain propagation of the rupture with possible loss of sealing by the kit.

In addition, the Applicant has experimentally verified that a flexible support and tensioning band comprising crossed fibres embedded in the polymer matrix is very effective in preventing stress concentrations when the tensioning and tightening members comprise screws or bolts that may require holes or cuts to be made in the composite material in order to bring the elongated elements closer together.

Finally, the Applicant has experimentally verified that a flexible support and tensioning band comprising crossed fibres embedded in the polymer matrix is quite effective in reducing bending deformation of the elongated elements as a result of the tightening operations.

In a particularly preferred embodiment, said flexible support and tensioning band comprises reinforcing fibres embedded in said polymer matrix and oriented substantially parallel to the longitudinal axis of said flexible support and tensioning band at least near opposite transversal edges of said flexible support and tensioning band.

In preferred embodiments, the reinforcing fibres embedded in the polymer matrix may be threads or fibres of a so-called triaxial or quadriaxial fabric embedded in said polymer matrix.

In this additional reinforcing configuration of the flexible support and tensioning band, it is advantageously possible to achieve the technical effects outlined above even more effectively.

In preferred embodiments, the aforementioned reinforcing fibres oriented obliquely to the longitudinal axis of the flexible support and tensioning band and the reinforcing fibres oriented substantially parallel to this longitudinal axis may be embedded in respective layers overlapping each other.

In preferred embodiments, these fibre-reinforced layers can be structurally independent of each other or joined together to form a single monolithic layer after cross-linking (in the case where the polymer matrix is a thermosetting matrix) or lamination (in the case where the polymer matrix is a thermoplastic matrix).

Within the framework of these preferred embodiments, and as will be better apparent in the following, the flexible support and tensioning band is positioned on the pipe to be repaired in such a way that the longitudinal axis of the reinforcing fibres oriented substantially parallel to the longitudinal axis of the layer is arranged substantially orthogonal to the longitudinal axis of the pipe.

Advantageously, this arrangement imparts a high tensile strength to the flexible support and tensioning band.

The Applicant has experimentally verified that a combination of crossed reinforcing fibres with reinforcing fibres oriented substantially parallel to a longitudinal axis of the layer, either in a single layer or by combining two different layers, allows to limit as far as possible any deformation phenomena of the flexible support and tensioning band and of the elongated elements during the closing operations of the kit and tensioning of said band, avoiding that crossed reinforcing fibres oriented obliquely with respect to the longitudinal axis of the flexible support and tensioning band may slide towards a central area of the elongated elements positioned along a longitudinal centreline of the elongated elements themselves, thus causing an undesired deformation.

As mentioned above, in a particularly preferred embodiment, the crossed reinforcing fibres and/or the reinforcing fibres parallel to the axis of the flexible support and tensioning band can be threads or fibres of a fabric embedded in the polymer matrix.

In this way, it is advantageously possible to realize the flexible support and tensioning band using one or more layers of composite material with crossed and/or parallel fibres using techniques known in the art of composite materials including fabrics impregnated with a suitable hardenable polymer resin or embedded in a suitable thermoplastic polymer.

Preferably, said flexible support and tensioning band further comprises at least one polymeric film applied to an external face of said at least one layer made of a composite material.

Preferably, said at least one polymeric film is free of reinforcing fibres therein.

Preferably, said flexible support and tensioning band comprises a pair of polymeric films applied on opposite external faces of said at least one layer made of a composite material.

Advantageously, this or these polymeric films ensure that during bending of the flexible support and tensioning band or during its wrapping around one or both the elongated elements, the radius of curvature of the flexible support and tensioning band is more homogeneous and that the reinforcing fibres are protected from the stresses produced by excessive local curvatures.

This or these polymeric films therefore provide(s) an effective protection effect of the reinforcing fibres against a modest increase in the flexural rigidity of the flexible support and tensioning band, which is fully tolerable for the repair purposes of the kit according to the invention.

Preferably, said polymeric film or films have a compressive elastic modulus, measured according to ASTM D695, lower than 2.5 GPa, preferably lower than 1.8 GPa, more preferably lower than 1.5 GPa.

Since it may be impossible or difficult to assess a lower end value of the compressive elastic modulus by means of the ASTM D695 test, it is alternatively possible to refer to a related entity, i.e. the hardness according to the Shore A scale values, which is preferably greater than or equal to 30, more preferably greater than or equal to 40, and even more preferably greater than or equal to 50.

Preferably, the Shore D hardness of said polymer film or films is lower than or equal to 75, more preferably lower than or equal to 70, and even more preferably lower than or equal to 65.

Advantageously, the use of such superficial polymer films having a relatively low compressive elastic modulus for coating the external surfaces of the composite layer prevents the formation of cracks during the adjustment and wrapping of the flexible support and tensioning band around the pipe, while also allowing the flexible support and tensioning band to be wrapped around limited radii of curvature.

Preferably, said polymer film or films comprise or consist of one or more of the following materials: polyethylene, polypropylene, ethylene vinyl acetate (EVA), SBR rubber, EPDM rubber, silicone rubber, polyurethane, or other thermoplastic elastomers.

Preferably, each individual polymeric film has a thickness comprised between 40 µm and 1000 µm.

In preferred embodiments, the connection zone of the flexible support and tensioning band to said first elongated element and/or to said second elongated element may comprise at least one substantially loop-shaped portion of the flexible support and tensioning band.

As mentioned above, this connection zone is located in a connection section of the flexible support and tensioning band to the elongated elements that is separate from the interaction section with the flexible gasket sheet and does not come into contact with the latter.

The loop-shaped configuration (which takes on a shape with a substantially drop-shaped section when the flexible support and tensioning band is subjected to tension by bringing the elongated elements closer together) of the connection zone of the flexible support and tensioning band to the elongated elements allows to achieve a number of important advantageous technical effects.

The loop-shaped configuration of the connection zone, in fact, allows the elongated element and the flexible support and tensioning band to be coupled together in such a way as to leave the elongated element free to rotate about its own axis within the loop. This advantageously prevents the tensile force which the flexible support and tensioning band is subjected to from generating significant torsional loads in the flexible support and tensioning band, which in turn would generate bending moments on the tightening members (preferably screws or bolts).

In preferred embodiments, the substantially loop-shaped portion of the flexible support and tensioning band may be made by looping the material forming the flexible support and tensioning band, for example an end portion of the flexible support and tensioning band, and attaching the looped flap to the remaining portion of the flexible support and tensioning band, thereby forming a joining zone.

The looped flap can be fixed to the flexible support and tensioning band at appropriate positions by any technique known to a person skilled in the art, for example by stitching, heat-sealing/melting the polymer matrix (if thermoplastic), gluing.

In this way, it is possible, for example, to form a plurality of substantially loop-shaped portions of the flexible support and tensioning band suitably spaced apart from each other so as to allow stepwise adjustment to different pipe diameters.

The resulting drop shape of the loop also allows, in conjunction with a suitable choice of length of the looped flap, to minimise peeling stresses at the joining zone between the flap and the remaining part of the flexible support and tensioning band, stresses which can be disadvantageous for the aforementioned joining methods.

The substantially loop-shaped portion of the flexible support and tensioning band therefore advantageously allows to have essentially shear stresses at the joining zone between the flap and the remaining portion of the flexible support and tensioning band when the repair kit is applied to the pipe, which stresses can be adequately withstood without relative sliding from the joining zone.

In preferred embodiments, the kit of the present invention further comprises an abutting elongated element configured to be externally associated to said first and/or said second elongated element.

Preferably, the abutting elongated element is also configured to cooperate with said first and/or said second elongated element to clamp said flexible support and tensioning band by means of said tightening members.

Within the framework of this preferred embodiment and as explained above, it is preferable and advantageous if the first and/or the second elongated element have a substantially circular cross-section.

In preferred embodiments, said abutting elongated element may comprise a recess having a shape substantially mating an outer surface of said first and/or said second elongated element.

Advantageously, this configuration of the abutting elongated element further enhances the performance of the group for closing the kit and tensioning the flexible support and tensioning band when adjusting the length of the interaction section with said flexible gasket sheet of the flexible support and tensioning band to suit the diameter of the pipe to be repaired.

The abutting elongated element, in fact, forms by cooperating with the elongated element a friction-based adjustment system of the length of the flexible support and tensioning band required for wrapping the pipe.

This friction-based adjustment system allows, in particular, to hold the flexible support and tensioning band in position when traction is applied to the excess portion of the flexible support and tensioning band in order to adjust the length of the flexible support and tensioning band wrapped as a function of the outer diameter of the pipe before tightening the kit using the closing group.

Advantageously, adequate performance of this friction-based adjustment system of the kit can be achieved by partially wrapping or by wrapping in one or more coils the flexible support and tensioning band around the elongated element and/or around the abutting elongated element.

In a preferred embodiment, the kit may further comprise a thin metal or rigid plastic sheet or foil, configured to cooperate with the flexible support and tensioning band in such a way as to hold the latter in place, but in a yielding manner, during the length adjustment operations of the flexible support and tensioning band.

Preferably, this sheet or foil is, in use, interposed between the flexible support and tensioning band at least partially wrapped around the elongated element and the flexible gasket sheet at the elongated element itself.

Preferably, the radius of curvature of the abutting elongated element surfaces configured to contact the flexible support and tensioning band is appropriately designed to minimise the bending stresses to which the flexible support and tensioning band wrapped around the abutting elongated element is subjected to.

To this end, the radius of curvature of such surfaces of the abutting elongated element is preferably greater than 3.5 mm.

In a further preferred embodiment, said first and/or said second elongated element may have a substantially semi-circular cross-section.

Within the framework of this preferred embodiment, said abutting elongated element can have a substantially semi-circular cross-section.

Preferably, a substantially flat face of said first and/or said second elongated element is configured to cooperate with a substantially flat face of said abutting elongated element to clamp the flexible support and tensioning band by means of the tightening members.

Preferably, at least a portion of an external surface of said first elongated element and/or of said second elongated element and/or of said abutting elongated element comprises a plurality of recesses, corrugations or is substantially knurled.

Advantageously, also in this preferred embodiment, the first and/or second elongated element and the abutting elongated element cooperating therewith form a friction-based adjustment system for adjusting the length of the flexible support and tensioning band required to wrap the pipe, which achieves the advantages outlined above.

Preferably, said tightening members comprise a plurality of tightening bolts or screws.

Preferably, said first elongated element and said second elongated element comprise a corresponding plurality of through openings configured to house said bolts or said screws.

In this preferred embodiment, the kit of the invention is advantageously provided with very simple, low-cost, easy-to-find tightening members that are fully capable of ensuring an effective clamping action of the elongated elements towards one another.

In a further preferred embodiment, said first and/or said second elongated elements comprise a substantially prismatic, for example square, pentagonal or hexagonal, or substantially cylindrical, inner core, on which a tubular shell is rotatably mounted.

In this preferred embodiment, an end portion of said flexible support and tensioning band is preferably fixed to said tubular shell.

Preferably, said tubular shell comprises a toothing formed at least at a free end thereof.

Preferably, said toothing is configured to mesh with a toothed wheel fixed to a head of a tightening bolt or screw, or to a tightening nut of a bolt, of said tightening members.

Advantageously, this preferred configuration of said first and/or said second elongated element and of said tightening members allows both a fine adjustment of the length of the interaction section with said flexible gasket sheet of the flexible support and tensioning band to adapt to the diameter of the pipe to be repaired, and to wrap at least an excess portion of the flexible support and tensioning band around said first and/or said second elongated element.

In this way, the excess portion of the flexible support and tensioning band is kept inside the kit once the repair operations are completed, thus avoiding the need to cut on site the excess portion of the flexible support and tensioning band and/or having to somehow fix this excess portion to the repaired pipe.

Preferably, said tubular shell and said inner core comprise at least one through hole.

Preferably, the kit further comprises at least one locking pin configured to cooperate with said at least one through hole of said inner core and of said tubular shell to block the rotation of said tubular shell about said inner core of said first and/or of said second elongated element.

In this way, it is advantageously possible to avoid a possible loosening of the flexible support and tensioning band wrapped around the pipe to be repaired over time, resulting in greater durability of the repair.

In this preferred embodiment, at least one of said connection zones of said flexible support and tensioning band is configured to be wrapped around one of said first or said second elongated element and comprises a longitudinal slot configured to allow the passage of said locking pin of the tubular shell rotation around said inner core of said first or said second elongated element.

In a preferred embodiment, said group for closing the kit and tensioning said flexible support and tensioning band further comprises at least one compression spring, more preferably a Belleville spring, configured to be mounted between a head of said bolts, or a tightening nut of said screws, and said first and/or said second elongated element.

Advantageously, this preferred configuration of the group for closing the kit allows to reduce the problems associated to possible loosening phenomena of the flexible support and tensioning band due to relaxation phenomena of the flexible gasket sheet made of elastomeric material, keeping the elongated elements tightly clamped together even over time.

The compression springs, furthermore, provide a clear feedback on the tightening force applied when assembling the kit and improve the distribution of forces between the screws or bolts of the group for closing the kit and tensioning said flexible support and tensioning band.

Preferably, the kit of the present invention further comprises at least one slider slidably mounted on a shank of at least one of said tightening screws or at least one of said bolts.

Preferably, said at least one slider is configured to associate said screw or said bolt to said first elongated element and/or to said second elongated element.

Advantageously, this slider forms a quick-closing system for the kit and allows the flexible support and tensioning band to be easily closed around the pipe to be repaired, before proceeding to tighten the bolts or screws.

Such a quick-closing slider system is particularly useful in emergency working conditions, with confined and flooded spaces due to leakage in the case of a repair of a pipe for transporting water or other liquids.

Preferably, in the method of the present invention applying said first traction on the excess portion of said flexible support and tensioning band comprises wrapping at least in part said excess portion of said flexible support and tensioning band around said second elongated element.

Preferably, in the method of the present invention applying said first traction on the excess portion of said flexible support and tensioning band further comprises running at least in part said excess portion of said flexible support and tensioning band around an abutting elongated element, preferably an abutting elongated element as more particularly described above, externally associated to said second elongated element.

Preferably, when the first and/or second elongated element comprises a substantially cylindrical inner core on which a tubular shell is rotatably mounted to which an end portion of said flexible support and tensioning band is fixed, wrapping said excess portion of said flexible support and tensioning band around said second elongated element comprises rotating said tubular shell about a longitudinal axis of said second elongated element.

### Brief description of the figures

Additional features and advantages of the invention will become more readily apparent from the description of some preferred embodiments of a device for repairing a damaged pipe for fluids, provided by way of non-limiting example with reference to the drawings attached hereto.

In the drawings, which are schematic and not to scale:
- FIG. 1 schematically illustrates a perspective view of a first preferred embodiment of a kit for repairing a damaged pipe for fluids according to the present invention;
- FIG. 2 schematically illustrates a further perspective view of the kit of FIG. 1, taken from an observation point substantially opposite to that of FIG. 1;
- FIG. 3 schematically illustrates an exploded perspective view of the kit of FIG. 1;
- FIG. 4 schematically illustrates a side elevation view, in an enlarged scale, of the kit of FIG. 1 mounted on a damaged pipe for fluids;
- FIG. 5 schematically illustrates an exploded perspective view of a portion of a preferred embodiment of a flexible support and tensioning band of the kit of FIG. 1, with respect to a pipe for fluids (hatched);
- FIG. 6 schematically illustrates a perspective view of a second preferred embodiment of a kit for repairing a damaged pipe for fluids according to the present invention;
- FIG. 7 schematically illustrates a further perspective view of the kit of FIG. 6, taken from an observation point substantially opposite to that of FIG. 6;
- FIG. 8 schematically illustrates an exploded perspective view of the kit of FIG. 6;
- FIG. 9 schematically illustrates a side elevation view, in an enlarged scale, of the kit of FIG. 6 mounted on a damaged pipe for fluids;
- FIG. 10 schematically illustrates a perspective view of an elongated element according to a further preferred embodiment of a kit for repairing a damaged pipe for fluids according to the present invention;
- FIG. 11 schematically illustrates a perspective view of an abutting elongated element according to the preferred embodiment of the kit of FIG. 10;
- FIG. 12 schematically illustrates a side elevation view, on an enlarged scale, of the elongated element of FIG. 10;
- FIG. 13 schematically illustrates a side elevation view, on an enlarged scale, of the abutting elongated element of FIG. 11;
- FIG. 14 schematically illustrates a perspective view of a further preferred embodiment of a device for repairing a damaged pipe for fluids according to the present invention;
- FIG. 15 schematically illustrates a further perspective view of the device of FIG. 14, taken from an observation point substantially opposite to that of FIG. 14;
- FIG. 16 schematically illustrates an exploded perspective view of the device of FIG. 15;
- FIG. 17 schematically illustrates a side elevation view, on an enlarged scale, of the device of FIG. 14 mounted on a damaged pipe for fluids.

### Detailed description of currently preferred embodiments

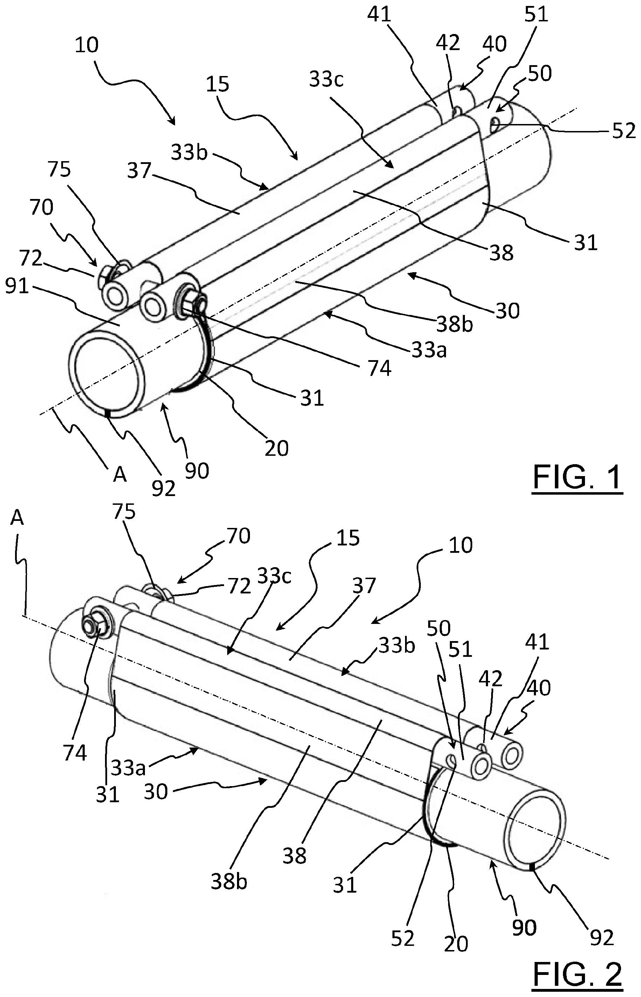

With initial reference to FIGS. 1-5, a first preferred embodiment of a kit (generally referred to with reference number 10) for repairing a damaged pipe 90 for fluids according to the present invention is shown.

The pipe 90 is for example a pressure pipe for the distribution of mains water. The pipe 90 has a rectilinear extension with longitudinal axis A and has a damaged portion 92 (see FIG. 1, 2 and 4).

The kit 10 comprises a flexible gasket sheet 20, a flexible support and tensioning band 30 and a group 15 for closing the kit and tensioning the flexible support and tensioning band 30.

The group 15 for closing the kit and tensioning the flexible support and tensioning band 30 comprises a first elongated element 40, a second elongated element 50 and tightening members 70.

The flexible support and tensioning band 30 essentially comprises the following three sections 33a-33c: i) a first interaction section 33a with the flexible gasket sheet 20, ii) a second connection section 33b with the first elongated element 40 and iii) a third connection section 33c with the second elongated element 50.

The first section 33a is interposed between the second section 33b and the third section 33c, along the longitudinal direction of the flexible support and tensioning band 30.

The connection sections 33b, 33c each comprise a connection zone 37, 38 configured to be associated to the first elongated element 40 and, respectively, to the second elongated element 50.

The flexible gasket sheet 20 is made of an elastomeric material and is configured for application to an external surface 91 of the pipe 90 to cover the damaged portion 92. The flexible gasket sheet 20 has an essentially rectangular shape, with long sides being arranged parallel to the longitudinal axis A and short sides being arranged orthogonally to the longitudinal axis A.

The flexible support and tensioning band 30 is configured to be associated to the flexible gasket sheet 20.

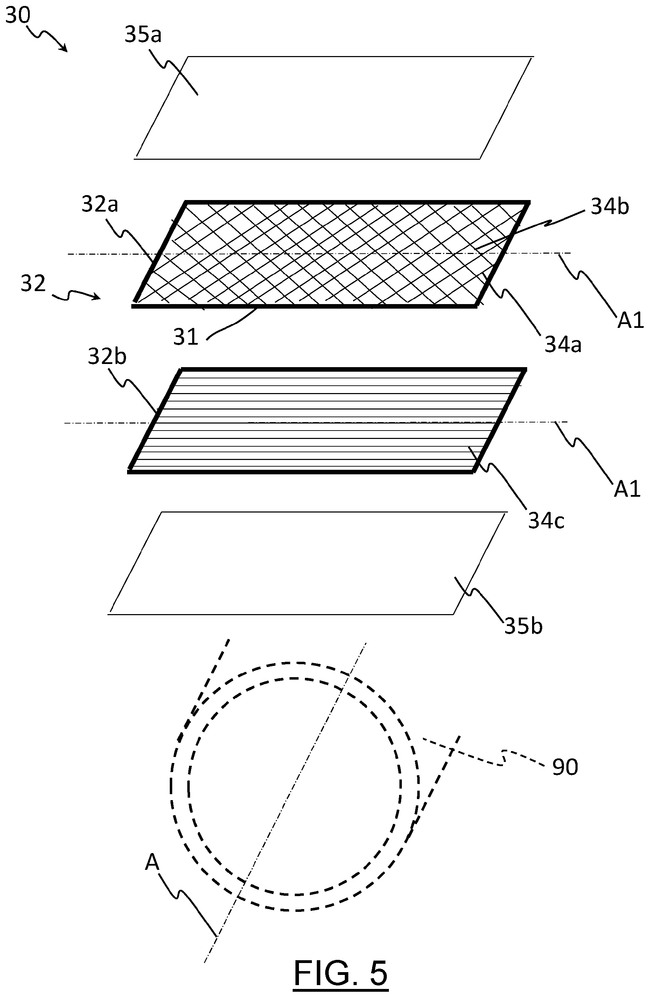

In the preferred embodiment illustrated, the flexible support and tensioning band 30 has a substantially rectangular shape, with long sides being arranged orthogonally to the longitudinal axis A and short sides being therefore arranged parallel to the longitudinal axis A (see FIG. 5).

In the preferred embodiment illustrated, the flexible support and tensioning band 30 comprises at least one layer 32 made of a composite material comprising a polymer matrix in which reinforcing fibres 34a, 34b, 34c are embedded (see FIG. 5).

Preferably, the polymer matrix has a compressive elastic modulus, measured according to ASTM D695, comprised between 0.3 GPa and 6 GPa, more preferably between 0.5 GPa and 4.5 GPa and, even more preferably, between 0.7 GPa and 3 GPa.

The compressive elastic modulus can be determined by the ASTM D695 test on a specimen having the same formulation as the polymer matrix of the flexible support and tensioning band 30 (including the presence of any additives and hardeners, but without reinforcing fibres) and subjected to the same production cycle used to make the flexible support and tensioning band 30.

The polymer matrix can be thermoplastic or thermosetting.

In the first case, the polymer matrix comprises, or consists of, one or more of the following materials: polypropylene (PP), polyethylene (PE), in particular high-density or medium-density polyethylene (HDPE, MDPE), polyethylene terephthalate (PET), acrylonitrile-butadiene-styrene (ABS), polycarbonate (PC), polyamide (PA), polysulphone (PSU).

In the second case, the polymer matrix comprises, or consists of, an epoxy or unsaturated polyester resin. The epoxy resin preferably contains elasticising or plasticising additives.

The layer 32 preferably has a thickness comprised between 0.1 mm and 2.5 mm, more preferably between 0.2 mm and 2 mm, even more preferably between 0.3 mm and 1.5 mm.

In the preferred non-limiting example illustrated in FIG. 5, the flexible support and tensioning band 30 may comprise a first layer 32a and a second layer 32b.

The first layer 32a is made of a composite material comprising the polymer matrix in which a first plurality of reinforcing fibres 34a is embedded, parallel to each other and oriented obliquely with respect to a longitudinal axis A1 of the flexible support and tensioning band 30 and, in this case, of the first layer 32a by an angle of about 45° and a second plurality of reinforcing fibres 34b, parallel to each other and oriented obliquely with respect to a longitudinal axis A1 of the flexible support and tensioning band 30, by an angle of about 45° with an inclination opposite to that of the first plurality of reinforcing fibres 34a.

The first plurality of reinforcing fibres 34a and the second plurality of reinforcing fibres 34b of the first layer 32a are preferably threads or fibres of a fabric embedded in the polymer matrix. In this preferred embodiment, the fabric is therefore a biaxial fabric.

The second layer 32b is made of composite material comprising the polymer matrix in which reinforcing fibres 34c are embedded oriented substantially parallel to the longitudinal axis A1 of the flexible support and tensioning band 30 and, in this case, of the second layer 32b of the flexible support and tensioning band 30.

The reinforcing fibres 34c are preferably threads or fibres of a fabric embedded in the polymer matrix. In this preferred embodiment, the fabric is therefore a single-axis fabric.

The flexible support and tensioning band 30 is then positioned on the pipe 90 so that its longitudinal axis A1 is arranged substantially orthogonal to the longitudinal axis A of the pipe 90 as schematically illustrated in Fig. 5.

In an embodiment, not illustrated, the second layer 32b is made of a composite material comprising the polymer matrix in which a first plurality of reinforcing fibres is embedded, preferably parallel to each other, oriented substantially parallel with respect to the longitudinal axis A1 of the flexible support and tensioning band 30, and a second plurality of reinforcing fibres, preferably parallel to each other, oriented substantially orthogonally with respect to the longitudinal axis A1.

Preferably, also in this case the reinforcing fibres are threads or fibres of a fabric embedded in the polymer matrix. In this preferred embodiment, the fabric is therefore a biaxial fabric.

In other embodiments, not illustrated, and as explained above, one or more layers comprising triaxial or quadriaxial fabrics can also be used to achieve similar results.

The Applicant has noted that it is preferable that at least part of the reinforcing fibres (as in the case of the reinforcing fibres 34a and 34b) are diagonally oriented with respect to the longitudinal edges 31 of the flexible support and tensioning band 30, in order to better distribute the stresses generated in the composite material as a result of clamping around the pipe 90. In fact, the area of the flexible support and tensioning band 30 applied at the position corresponding to the damaged portion of the pipe 90 is generally more stressed, and it is therefore convenient to distribute the forces over the widest possible area of the composite material in order to prevent that some of the more stressed reinforcing fibres 34a, 34b, 34c may break, triggering a domino breaking effect.

In addition, if the tightening members 70 comprise bolts or screws, as described below, they may be located at certain areas of the flexible support and tensioning band 30 where holes or cuts may have to be made in the composite material to ensure their passage, which tend to produce a stress concentration that can be drastically reduced by the diagonally oriented reinforcing fibres 34a and 34b.

Additionally, the presence of the reinforcing fibres 34a and 34b diagonally oriented with respect to the first and to the second elongated elements 40, 50 used in the clamping helps to reduce the bending deformation of the latter during the clamping operation.

On the other hand, it is also advantageous to have reinforcing fibres 34c oriented in a tangential direction with respect to the circumference of the pipe 90 to be repaired (and therefore perpendicular to the first and second elongated elements 40, 50), in particular in the areas of the transversal edges 31 of the flexible support and tensioning band 30.

The Applicant has in fact verified that in the absence of the aforementioned reinforcing fibres 34c oriented in a tangential direction with respect to the circumference of the pipe 90, creep phenomena may occur in the diagonally oriented reinforcing fibres 34a and 34b towards the centre of the flexible support and tensioning band 30, with a possible deformation of the composite material.

The production of the composite material can be carried out with the traditional techniques used in composite manufacturing. In particular, it is possible to employ the composite lamination technology, by superimposing the different layers 32a and 32b which the composite material is made of on a mould (which in the present case can also have a flat geometry).

For example, the fibre-reinforced layers 32a and 32b can be made using pre-impregnates or by performing contextual impregnation, e.g. by laminating layers of fabric and layers of thermoplastic polymer films or thermoplastic powders, which subsequently impregnate the fabric as they melt.

In preferred embodiments and as explained above, therefore, the fibre-reinforced layers 32a and 32b can be joined together to form a single monolithic layer after cross-linking (in the case where the polymer matrix is a thermosetting matrix) or after melting of the thermoplastic powders (in the case where the polymer matrix is a thermoplastic matrix).

After lamination, the composite material is generally covered with a release film, a breathable felt and then with a vacuum bag. This bag is sealed around the mould. Through a pump, air is sucked from the bag through the breathable felt, creating at least a partial vacuum. This process removes any air bubbles and ensures homogeneous adhesion between the layers 32a and 32b of composite material.

The laminated and vacuum-packed material is then transferred to an oven or autoclave, so that it is subjected for the time required to the pressures and temperatures required for the polymer matrix to harden, in the case of a thermosetting matrix, or for the polymer matrix to melt, in the case of a thermoplastic matrix. The composite material, through an appropriate thermal ramp depending on the materials used, is then brought back to room temperature and pressure, and extracted for subsequent finishing operations.

The reinforcing fibres 34a, 34b, 34c are preferably continuous or long fibres. By way of non-limiting example, the reinforcing fibres 34a, 34b, 34c are glass fibres or fibres of ultra-high molecular weight polyethylene (UHMWPE).

In preferred embodiments, the reinforcing fibres 34a, 34b, 34c have a tensile modulus of elasticity, measured according to ASTM C1557, greater than, or equal to, 20 GPa and lower than, or equal to, 1500 GPa. More preferably, this tensile modulus of elasticity is greater than, or equal to, 40 GPa and lower than, or equal to, 800 GPa. Even more preferably, the tensile modulus of elasticity is greater than, or equal to, 50 GPa and lower than, or equal to, 500 GPa.

In the non-limiting example illustrated in FIG. 5, the flexible support and tensioning band 30 may further comprise a pair of polymer films 35a, 35b applied to opposite external faces of the layers 32a, 32b made of a composite material. The polymer film 35a is then applied to the external face of the first layer 32a and polymer film 35b is applied to the external face of the second layer 32b, whereas the inner face of the first layer 32a is associated to the inner face of the second layer 32b.

In an embodiment, only one of the polymer films 35a, 35b may be provided.

The polymer films 35a, 35b preferably have a compressive elastic modulus, measured according to ASTM D695 of lower than 2.5 GPa, more preferably lower than 1.8 GPa and even more preferably lower than 1.5 GPa, and a hardness according to Shore A scale preferably greater than 30, more preferably greater than 40 and even more preferably greater than 50.

The polymer films 35a, 35b preferably comprise, or consist of, one or more of the following materials: polyethylene, polypropylene, ethylene vinyl acetate (EVA), SBR rubber, EPDM rubber, silicone rubber, polyurethane, or other thermoplastic elastomers.

The polymer films 35a, 35b preferably have a thickness comprised between 40 µm and 1000 µm.

The first elongated element 40 and the second elongated element 50 comprise a respective elongated body 41, 51. The first and second elongated elements 40, 50 are made of steel (preferably stainless steel to better withstand the underground environment) and/or of composite material.

In the non-limiting example illustrated in FIGS. 1-4, the first and second elongated elements 40, 50 have a tubular shape, with a circular cross-section. Advantageously, the tubular elongated elements with a circular cross-section are readily available on the market and can be machined by means of particularly economical technologies.

The first and second elongated elements 40, 50 are configured to be associated to the flexible support and tensioning band 30 at the respective connection zones 37, 38 of the flexible support and tensioning band 30.

In particular, the connection zones 37, 38 are provided at opposite longitudinal end portions of the flexible support and tensioning band 30.

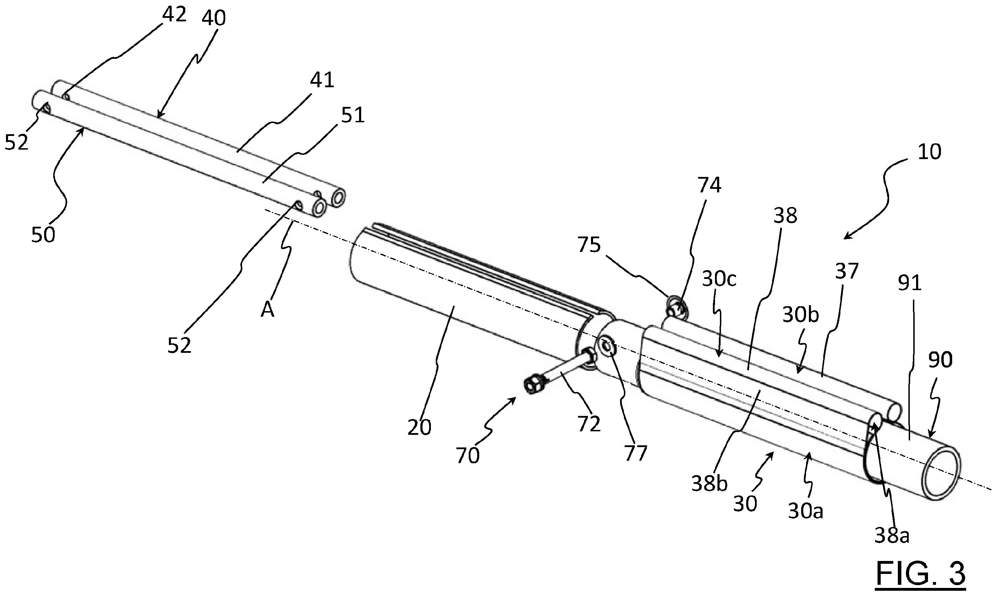

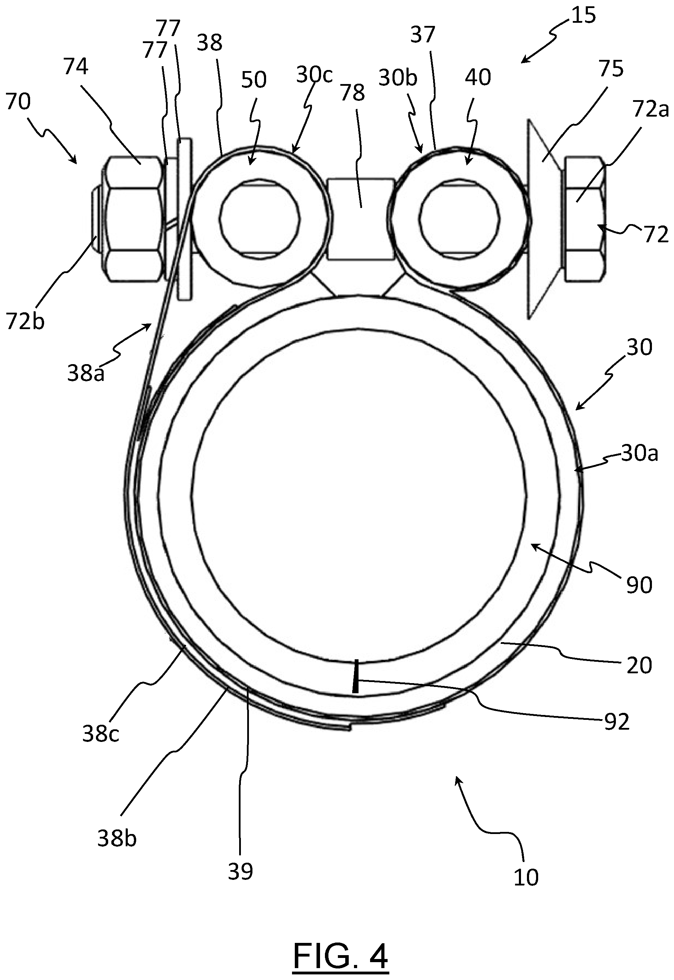

As illustrated in FIGS. 3 and 4, an end portion of the flexible support and tensioning band 30 is wrapped around the first elongated element 40 and fixed thereto, for example by gluing or polymerization around the first elongated element 40 of the matrix of the composite layer 32a, 32b of the flexible support and tensioning band 30.

As illustrated in FIGS. 1-4, the opposite end portion of the flexible support and tensioning band 30 is associated to the second elongated element 50 at the connection zone 38, which consists of a substantially loop-shaped portion 38a of the connection zone 38 of the flexible support and tensioning band 30 (see FIGS. 3 and 4).

As illustrated in FIG. 4, the substantially loop-shaped portion 38a can be made on site by folding an end flap 38b of the flexible support and tensioning band 30 around the second elongated element 50 and attaching the flap 38b onto a remaining portion 39 of the flexible support and tensioning band 30.

This attachment can be achieved, for example, by a hook and loop fastener, applying the relevant conjugated elements 38c on the end flap 38b and on the portion 39. In an embodiment, not illustrated, such attachment can be achieved by gluing, e.g. by applying an adhesive tape protected by removable film on the end flap 38b or on the portion 39.

In this preferred embodiment, the second elongated element 50 is advantageously free to rotate and slide within the substantially loop-shaped portion 38a facilitating the assembly and adjustment operations of the kit 10.

The substantially loop-shaped portion 38a allows in particular to adjust the useful length of the flexible support and tensioning band 30 to suit pipes 90 of different diameters. In other words, the second elongated element 50 can be arranged, as required, at a variable distance from the first elongated element 40, so as to reduce or increase the portion of the flexible support and tensioning band 30 between the first elongated element 40 and the second elongated element 50, in order to adapt the length of the flexible support and tensioning band 30 to the diameter of the pipe 90 to be repaired.

This adjustment is approximate and is followed by fine tuning, which also serves to put the flexible support and tensioning band 30 under tension and to compress the flexible gasket sheet, carried out by means of the tightening members 70, which are described below.

In an embodiment, not illustrated, the aforementioned end portion of the flexible support and tensioning band 30 can be associated to the second elongated element 50 at a connection area 38 comprising a plurality of substantially loop-shaped portions 38a, suitably spaced apart from each other, so as to be adaptable to pipes 90 having two or more different diameters.

The tightening members 70 are configured to be associated to the first and the second elongated element 40, 50 and to bring the first and the second elongated element 40, 50 reciprocally closer together by tensioning the flexible support and tensioning band 30.

Preferably, the tightening members 70 comprise a pair of bolts 72, having respective heads 72a and respective threaded shanks 72b, and tightening nuts 74 which are screwed onto the threaded shanks 72b. The first elongated element 40 and the second elongated element 50 comprise a corresponding plurality of through openings 42, 52 configured to house the bolts 72. In FIGS. 1-3 only one bolt 72 is illustrated so that the through holes 42, 52 can be seen.

In an embodiment, not illustrated, the bolts 72 can be replaced by screws if the through openings 42 or 52 are threaded, thus replacing the function of the tightening nut 74.

In a further embodiment, also not illustrated, the through openings 42, 52 can be replaced by slots longitudinally formed in the first elongated element 40 and/or in the second elongated element 50.

Preferably, the through openings 42, 52 of the first and of second elongated elements 40, 50 are located at opposite end portions of the respective elongated bodies 41, 51 of the first and second elongated elements 40, 50, thus outside of the flexible support and tensioning band 30 in the assembled condition of the kit illustrated in FIGS. 1-4.

In this way, it is advantageously possible to avoid drilling holes or cuts in the flexible support and tensioning band 30 to allow the passage of bolts 72 or screws of the tightening members 70 and thus avoid the triggering of undesirable shear stresses resulting from the traction of the flexible support and tensioning band 30 when closing the kit 10.

In the preferred embodiment illustrated, the tightening members 70 further comprise a pair of compression springs 75, preferably Belleville springs, inserted in the respective threaded shanks 72b of the pair of bolts 72 and configured to be mounted between the head 72a of the bolts 72 and the first elongated element 40.

In preferred embodiments, the first and second elongated elements 40, 50 can also perform the function of the Belleville springs 75, i.e. compression springs. For example, the first and second elongated elements 40, 50, if made in tubular form and of spring steel, may undergo elastic deformation when the tightening nuts 74 are tightened on the bolts 72.

The tightening members 70 further comprise washers 77, inserted in the threaded shank 72b of each bolt 72 and configured to be mounted between the tightening nuts 74 and the second elongated element 50.

In the preferred embodiment illustrated, the heads 72a of the bolts 72 and tightening nuts 74 therefore press on the surface of the first and second elongated elements 40, 50 by interposing further intermediate components, namely the Belleville springs 75 and the washers 77.

Advantageously, and as explained above, this preferred configuration of the group 15 for closing the kit 10 and tensioning the flexible support and tensioning band 30 allows to reduce the problems associated to possible loosening phenomena of the flexible support and tensioning band 30 resulting from relaxation of the flexible gasket sheet 20 made of elastomeric material, keeping the elongated elements 40, 50 tightly clamped together even over time.

The Belleville springs 75, furthermore, provide clear feedback on the clamping force, e.g. applied by means of torque spanners, when assembling kit 10 and improve the force distribution between the screws or bolts 72 of the group 15 for closing the kit 10 and tensioning the flexible support and tensioning band 30.

In an embodiment, not illustrated, the heads 72a of the bolts 72 and tightening nuts 74 can press directly onto the surface of the first and of the second elongated elements 40, 50.

In the preferred embodiment illustrated, the tightening members 70 comprise a sleeve 78 inserted in the threaded shank 72b of each bolt 72 and configured to be mounted between the first elongated element 40 and the second elongated element 50. The sleeve 78 is made of a material that yields under compression by applying a negligible force with respect to that required to tighten the bolts 72 (e.g. rubber, polymer foam, cellulose material, etc.).

Advantageously, the sleeve 78 simplifies the assembly operations carried out on site of the kit 10 and can also be removed when completed.

Advantageously and as explained above, the first elongated element 40 and the second elongated element 50 effectively distribute the quasi-point force produced by the tightening members 70 (bolts 72 or screws) over the entire width of the flexible support and tensioning band 30.

On the other hand, the tightening members 70 bring the flexible support and tensioning band 30 into tension, applying a force that brings the elongated elements 40, 50 closer together.

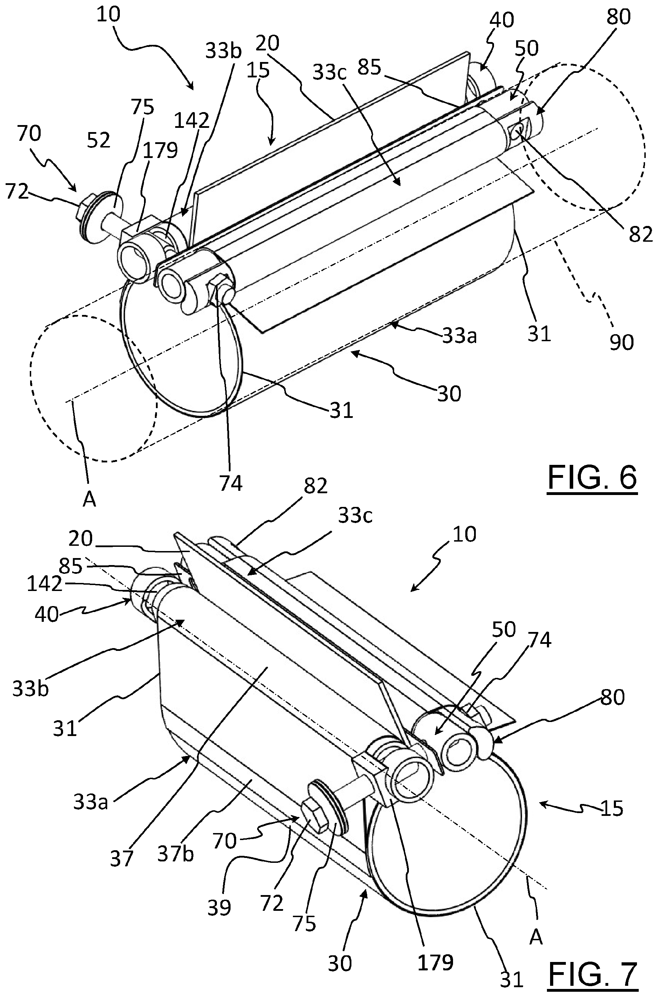

With reference to FIGS. 6-9, a second embodiment of a kit 10 for repairing a damaged pipe 90 for fluids according to the present invention is shown.

The components of the kit 10 of FIGS. 6-9 similar or functionally equivalent to those of the kit 10 of FIGS. 1-5 are indicated with the same reference number and for their description reference is made to the discussion above.

The kit 10 of FIGS. 6-9 differs from the kit 10 of FIGS. 1-5 essentially in the different way in which the first and the second elongated elements 40, 50 are associated to the flexible support and tensioning band 30.

As illustrated in FIGS. 7- 9, an end portion of the flexible support and tensioning band 30 is associated to the first elongated element 40 at the connection zone 37, which consists of a substantially loop-shaped portion 37a of the connection zone 37 of the flexible support and tensioning band 30.

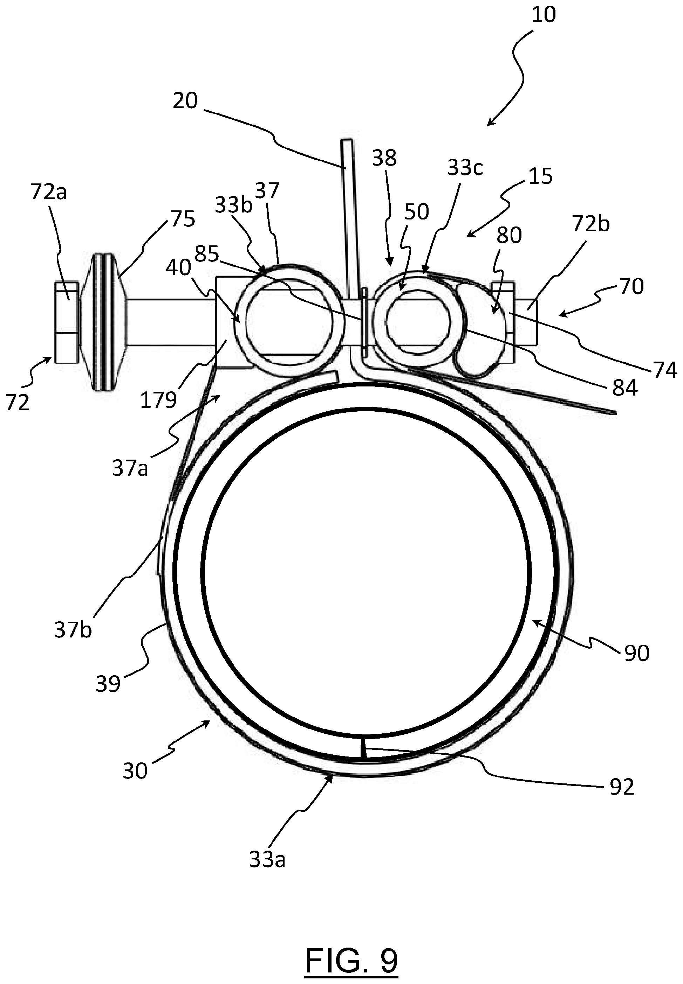

As illustrated in FIG. 9, the substantially loop-shaped portion 37a can be manufactured in the factory by folding an end flap 37b of the flexible support and tensioning band 30 and attaching the flap 37b to a remaining portion 39 of the flexible support and tensioning band 30 which is located, in use, upstream of the first elongated element 40. Such attachment can be achieved for example by stitching, thermal welding/fusion of the polymer matrix (if it is thermoplastic) or gluing.

This substantially loop-shaped portion 37a takes on a drop shape when the first elongated element 40 is pulled by putting the flexible support and tensioning band 30 under tension.

Advantageously, the first elongated element 40 has a circular cross-section and is free to rotate about its longitudinal axis within the substantially loop-shaped portion 37a.

Advantageously, this prevents the tensile force which the flexible support and tensioning band 30 is subjected to may produce significant torsional loads in the first elongated element 40, which in turn would generate bending moments on the bolts 72 or screws of the tightening members 70.

Advantageously, the drop shape of the substantially loop-shaped portion 37a is such that it does not stress the attachment zone between the end flap 37b and the portion 39 with peeling stresses that could be disadvantageous for the joining methods described above.

As a result of the application of the traction of the tightening members 70, essentially shear stresses are thus created in the attachment area between the end flap 37b and the portion 39, which are substantially parallel to the end flap 37b and the portion 39, and do not result in stresses perpendicular to the contact surface between the end flap 37b and the portion 39.

In an embodiment, the substantially loop-shaped portion 37a can be made by wrapping an end portion of the flexible support and tensioning band 30 onto an elongated element, for example a metal cylinder, acting as a moulding insert having a diameter equal to or slightly larger than that of the first elongated element 40 and then casting the polymeric matrix (or equivalently gluing together the composite layers 32 rolled around the metal cylinder).

At the end of this method, the metal cylinder is extracted from the thus wrapped end portion of the flexible support and tensioning band 30, obtaining a substantially loop-shaped portion 37a into which the first elongated element 40 is inserted.

As illustrated in FIGS. 6-9, the opposite end portion of the flexible support and tensioning band 30 is partially wrapped around the second elongated element 50 and secured thereto by means of an abutting elongated element 80.

In the preferred embodiment illustrated, the opposite end portion of the flexible support and tensioning band 30 is also wrapped around an abutting elongated element 80.

In an embodiment, not illustrated, the opposite end portion of the flexible support and tensioning band 30 can only be partially wrapped around the abutting elongated element 80.

The abutting elongated element 80 is configured to be externally coupled to the second elongated element 50 and to cooperate in abutment relationship with the second elongated element 50 to clamp the flexible support and tensioning band 30 therebetween by means of the tightening members 70.

In the preferred embodiment illustrated, the abutting elongated element 80 comprises a pair of through openings 82 configured to house the bolts 72 of the tightening members 70. The bolts 72 clamp the first elongated element 40, the second elongated element 50 and the abutting elongated element 80 together.

In the preferred embodiment illustrated, the second elongated element 50 has a circular cross-section and the abutting elongated element 80 has a substantially "bean-shaped" cross-section and comprises a recess 84 having a shape substantially mating an outer surface of the second elongated element 50 (see FIG. 9).

The cooperation between the abutting elongated element 80 and second elongated element 50 allows to adjust the useful length of the flexible support and tensioning band 30 to suit pipes 90 of different diameters. In other words, the second elongated element 50 can be arranged, as required, at a variable distance from the first elongated element 40, so as to reduce or increase the portion of the flexible support and tensioning band 30 between the first elongated element 40 and the second elongated element 50 depending on the diameter of the pipe 90 to be repaired. This adjustment is approximate and is preferably followed by a fine adjustment carried out by means of the tightening members 70 which put under tension the flexible support and tensioning band 30 and compress the flexible gasket sheet 20.

In this case, the opposite end portion of the flexible support and tensioning band 30 is associated to the second elongated element 50 by means of a friction force between the opposite end portion of the flexible support and tensioning band 30 and the respective outer surfaces of the second elongated element 50 and of the abutting elongated element 80. This friction force is proportional to that of the clamping force of the flexible support and tensioning band 30 around the pipe 90.

Advantageously, the rounded shape with a substantially "bean-shaped" cross-section of the abutting elongated element 80 avoids reducing too much the radii of curvature of the curved portions of the abutting elongated element 80, thereby reducing the stresses created in the flexible support and tensioning band 30 during bending.

At the same time, the substantially bean-shaped cross-section of the abutting elongated element 80 advantageously achieves the coupling with the second elongated element 50, which has a circular cross-section that is readily available on the market.

In the preferred embodiment illustrated, the kit 10 further comprises a plate 85 (or a sheet of rigid plastic) shaped to hold the flexible gasket sheet 20 loosely in place during the opening and adjustment of the flexible support and tensioning band 30. The flexible gasket sheet 20 in excess protruding from the flexible support and tensioning band 30 in FIGS. 6-9 is provided to allow for the repair of pipes 90 having a larger diameter than the one illustrated, and the removal thereof can possibly be provided during repair.

In the preferred embodiment illustrated, the tightening members 70 further comprise a slider 179 slidably mounted on the shank 72b of each bolt 72.

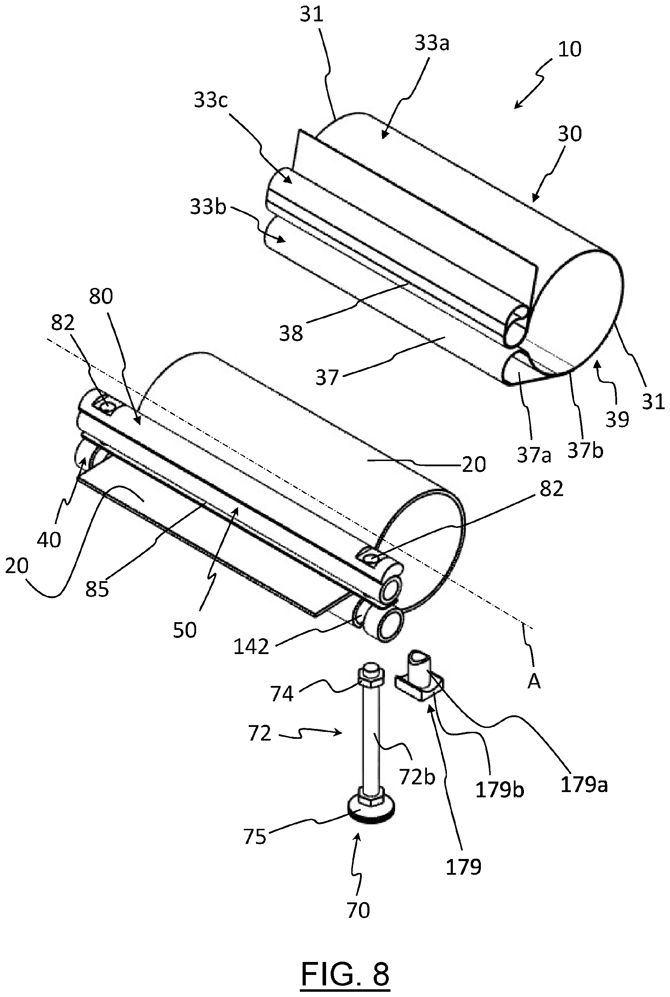

Preferably, the slider 179 comprises a tubular cylindrical body 179a and a substantially parallelepiped manoeuvring head 179b that can be manually operated by an operator who can slide the slider 179 along each bolt 72 when assembling the kit (see FIG. 8).

Advantageously, the slider 179 is configured to associate the bolts 72 to the first elongated element 40 and forms a quick-closing system of the kit 10 that allows to easily close the flexible support and tensioning band 30 around the pipe 90 to be repaired, before proceeding to tighten the bolts 72 or tightening members 70.

Such a quick-closing system using the slider 179 is particularly useful in emergency working conditions, with confined and flooded spaces due to leakage in the case of a repair of a pipe 90 for transporting water or other liquids.

In the preferred embodiment illustrated, the first elongated element 40 comprises a pair of slots 142 configured to house the bolts 72 and the slider 179 facilitating the on-site assembly of the kit 10 (see FIGS. 6 and 7).

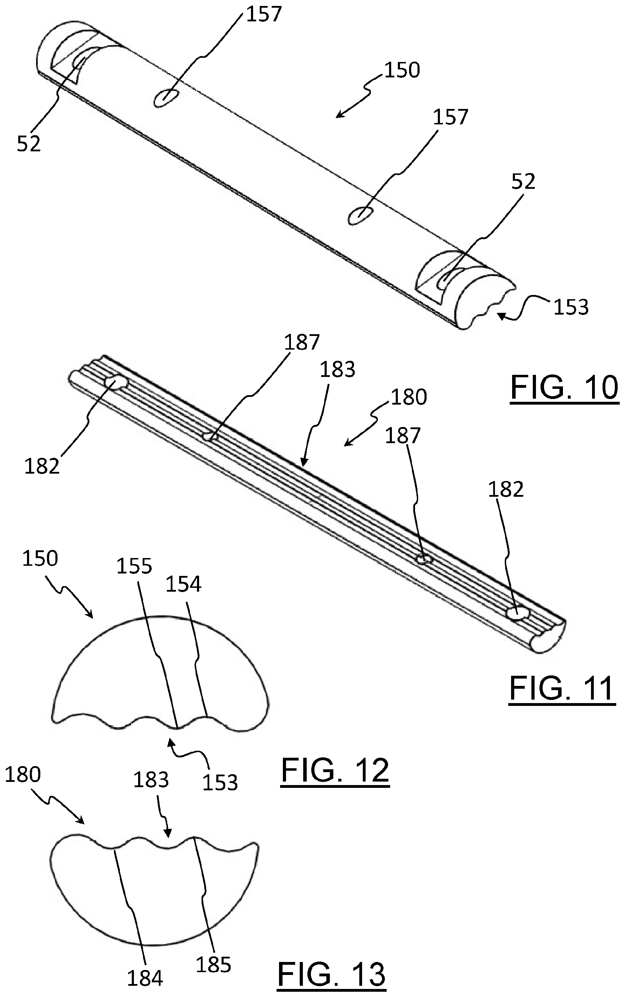

With reference to FIGS. 10-13, a further preferred embodiment of the second elongated element 150 and of the abutting elongated element 180 of a kit 10 for repairing a damaged pipe for fluids 90 according to the present invention will be illustrated.

In this further preferred embodiment, the second elongated element 150 has a substantially semi-circular cross-section with a substantially flat face 153.

The abutting elongated element 180 has a substantially semi-circular cross-section, with a substantially flat face 183 that is configured to cooperate with the substantially flat face 153 of the second elongated element 150.

Preferably, the abutting elongated element 180 comprises a pair of through openings 182 configured to accommodate the bolts 72 of the tightening members 70.

Preferably, also the second elongated element 150 comprises a pair of through openings 52 configured to house the bolts 72 of the tightening members 70.

In this preferred embodiment of the kit 10, the bolts 72 clamp the first elongated element 40, the second elongated element 150 and the abutting elongated element 180 together.

In this preferred embodiment of the kit 10, an end portion of the flexible support and tensioning band 30 is attached to the second elongated element 150 by interposition between the substantially flat face 183 of the abutting elongated element 180 and the substantially flat face 153 of the second elongated element 150.

Preferably, the abutting elongated element 180 and the second elongated element 150 are clamped together by means of the tightening members 70, and/or by means of special screws, not illustrated, inserted into the openings 187 and 157.

In the non-limiting example illustrated in FIGS. 10-13, the substantially flat face 153 and the substantially flat face 183 have mating surfaces, with recesses 154, 184 and projections 155, 185.

Preferably, the recesses 154, 184 and the projections 155, 185 have rounded sections with a radius of curvature preferably greater than, or equal to, three times the thickness of the flexible support and tensioning band 30, more preferably greater than, or equal to, four times the thickness of the flexible support and tensioning band 30, to prevent the flexible support and tensioning band 30 from being cut or damaged.

In embodiments not illustrated, the second elongated element 50, 150 and/or the abutting elongated element 80, 180 may comprise an outer surface portion that has multiple corrugations or is substantially knurled.

Also in this case, it is preferable that the corrugations and knurling be free of sharp edges that could cut the flexible support and tensioning band 30 or otherwise cause damage thereto, where the flexible support and tensioning band 30 is intended to be wrapped around the second elongated element 50, 150 and/or the abutting elongated element 80, 180.

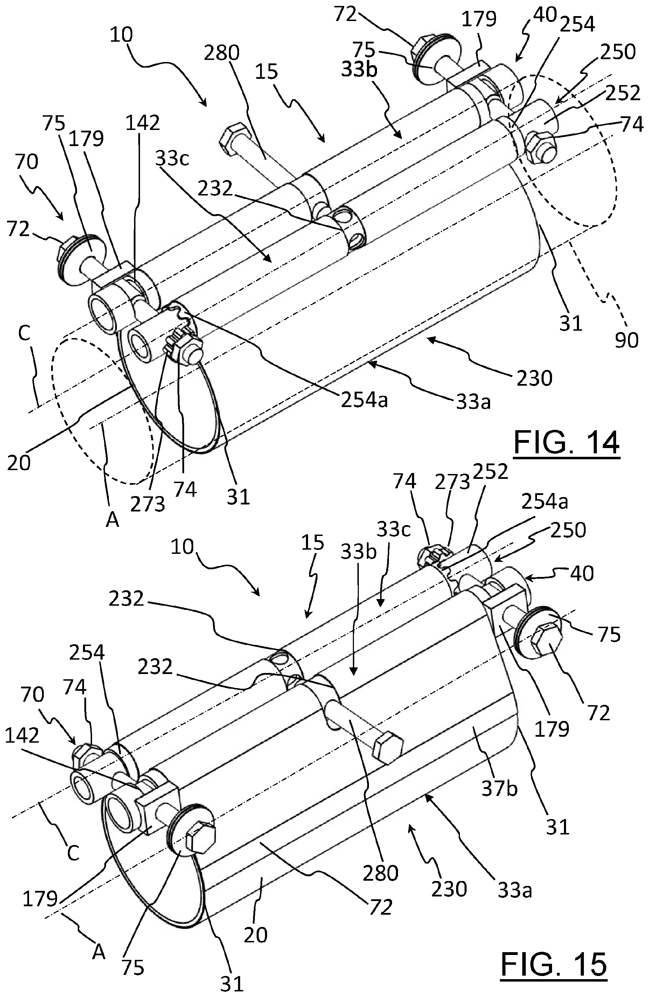

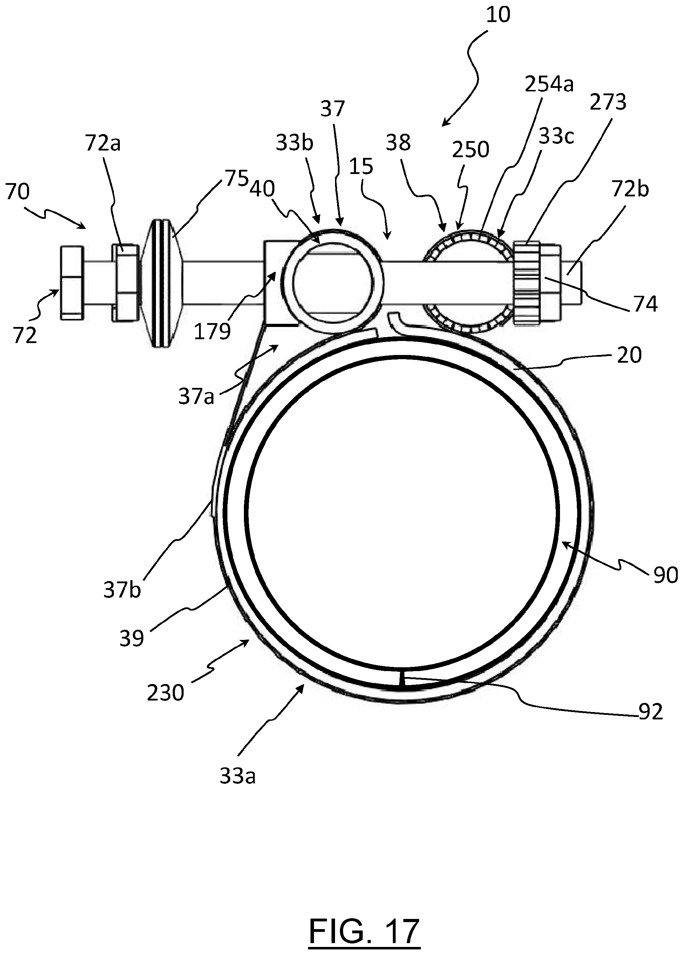

With reference to FIGS. 14-17, a further preferred embodiment of a kit 10 for repairing a damaged pipe 90 for fluids according to the present invention is shown.

The components of the kit 10 of FIGS. 14-17 similar or functionally equivalent to those of the kit 10 of FIGS. 1-9 are indicated with the same reference number and for their description reference is made to the discussion above.

The kit 10 of FIGS. 14-17 differs from the kit 10 of FIGS. 1-9 essentially due to the different way in which the second elongated element 250 is associated to the flexible support and tensioning band 30.

The second elongated element 250 comprises in this case an inner core 252, essentially cylindrical, on which a tubular shell 254 is rotatably mounted.

Preferably, the tubular shell 254 has a shorter length than the inner core 252. The tubular shell 254 rotates about an axis of rotation that coincides with a longitudinal axis C of the second elongated element 250.

Similarly to the previous embodiments, the second elongated element 250 and the first elongated element 40 are clamped by the tightening members 70.

In FIGS. 14-17 the inner core 252 of the second elongated element 250 is not shown in its entirety.

Preferably, the inner core 252 has substantially the same length as the first elongated element 40, so that the tightening members 70 can act on the inner core 252 of the second elongated element 250 and on the first elongated element 40 in a manner similar to that illustrated above.

An end portion of the flexible support and tensioning band 230 is attached to the tubular shell 254 of the second elongated element 250. This attachment can take place by gluing, heat moulding or mechanical clamping.

In this preferred embodiment, the tubular shell 254 comprises a toothing 254a formed at least at a free end thereof.

Preferably, a toothed wheel 273 is fixed (e.g. by welding) to a tightening nut 74 of a bolt 72 of the tightening members 70.

The toothed wheel 273 is configured to mesh with the toothing 254a.

As illustrated above, this preferred configuration of the second elongated element 250 and of the tightening members 70 allows both fine adjustment of the length of the interaction section 33a of the flexible support and tensioning band 230 with the flexible gasket sheet 20 to suit the diameter of the pipe to be repaired, and to wrap at least partially an excess portion of the flexible support and tensioning band 230 around the second elongated element 250.

These fine adjustment/wrapping operations are carried out in this case by rotating the tightening nut 74 and consequently the toothed wheel 273 so as to rotate the tubular shell 254 of the second elongated element 250, to which an end portion of the flexible support and tensioning band 30 is fixed, so as to wrap the latter around the tubular shell 254. The length of the flexible support and tensioning band 230 is thus adjusted by rolling it around the tubular shell 254 in order to adapt it to pipes 90 of different diameters.

In this way, the excess portion of the flexible support and tensioning band is advantageously retained within the kit 10 once the repair operations are completed, thus avoiding having to cut on-site the excess portion of the flexible support and tensioning band 230 and/or having to somehow secure this excess portion to the repaired pipe 90.

In an embodiment, not illustrated, the toothed wheel 273 can be fixed (e.g. by welding) to the head 72a of a bolt 72 of the tightening members 70.

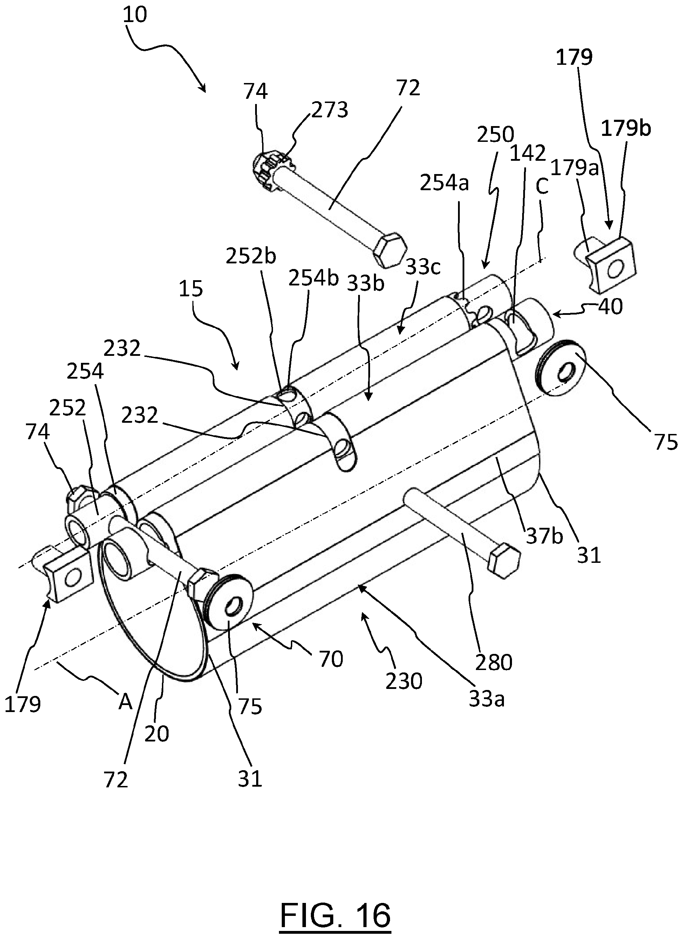

Preferably, the tubular shell 254 and the inner core 252 of the second elongated element 250 comprise a plurality of through holes 254b and 252b, respectively (see FIG. 16).

Preferably, the kit 10 of FIGS. 14-17 further comprises a locking pin 280 configured to cooperate with the through holes 252b, 254b of the inner core 252 and of the tubular shell 254 to lock the rotation of the tubular shell 254 around the inner core 252 of the second elongated element 250 and thereby prevent the unrolling of the end portion of the flexible support and tensioning band 230.

In this preferred embodiment, the connection section 33c of the flexible support and tensioning band 230 configured to be wrapped around the second elongated element 250 comprises a longitudinal slot 232 configured to allow the passage of the locking pin 280.

In the preferred embodiment illustrated in FIGS. 14 and 15, the locking pin may be constituted by a screw or bolt forming part of the tightening members 70.

In further preferred embodiments, the kit 10 may comprise other components to facilitate the adjustment and closure of the flexible support and tensioning band 30, 230 around the pipe 90 to be repaired, such as an adhesive label with a graduated scale present on or applied to the flexible support and tensioning band 30, 230 indicating how to carry out the adjustment according to the size of the pipe 90.

A preferred embodiment of the method for repairing on-site the damaged pipe 90, in particular a pressurised pipe 90 for mains water distribution, by means of a kit 10 as described above comprises the following steps.

Preferably, a pre-assembled group is provided for performing a repair, comprising:
- the flexible support and tensioning band 30, 230 associated to the first elongated element 40 at the respective connection zone 37 of the connection section 33b, and
- the flexible gasket sheet 20 associated to a face of the flexible support and tensioning band 30, 230 configured to face, in use, the pipe 90.

Preferably, the flexible gasket sheet 20 is associated to the flexible support and tensioning band 30, 230 at the interaction section 33a of the latter by spot gluing.

Subsequently, the flexible support and tensioning band 30, 230 with the flexible gasket sheet 20 associated thereto is wrapped around the outer surface 91 of the pipe 90.

Then, an excess portion of the flexible support and tensioning band 30 is folded around the second elongated element 50, 150, 250.

The method then provides for applying an initial traction on the excess portion of the flexible support and tensioning band 30, 230 to adapt a length of the flexible support and tensioning band 30, 230 wrapped around the outer surface 91 of the pipe 90 to an outer diameter of the pipe 90.

Subsequently, the method provides for bringing the first 40 and the second elongated element 50, 150, 250 closer to each other by means of the tightening members 70, so as to apply a second traction to the flexible support and tensioning band 30, 230 wrapped around the outer surface 91 of the pipe 90 and subjecting to compression the flexible gasket sheet 20 interposed between the flexible support and tensioning band 30, 230 and the pipe 90.

In preferred embodiments of the invention, the application of the first traction on the excess portion of the flexible support and tensioning band 30, 230 comprises wrapping at least in part the excess portion of the flexible support and tensioning band 30, 230 around the second elongated element 50, 150, 250.

In the preferred embodiments of the invention illustrated in FIGS. 6-13, applying the first traction to the excess portion of the flexible support and tensioning band 30 further comprises running at least in part the excess portion of the flexible support and tensioning band 30 around the abutting elongated element 80, 180 externally associated to the second elongated element 50, 150.

In the preferred embodiment of the invention illustrated in FIGS. 14-17, wrapping the excess portion of the flexible support and tensioning band 30 around the second elongated element 250 comprises rotating the tubular shell 254 around the longitudinal axis C of the second elongated element 250 by means of the toothed wheel 273 driven by a spanner acting on the tightening nut 74.

Clearly, those skilled in the art can make further modifications and variants to the above-described invention with the purpose of meeting specific and contingent application needs, variants and modifications in any case falling within the scope of protection as defined by the following claims.

## Claims

1. Kit (10) for repairing a damaged pipe (90) for fluids comprising:
- a flexible gasket sheet (20), made of an elastomeric material, which is configured for application to an external surface (91) of said pipe (90) to cover a damaged portion of the pipe (90);
- a flexible support and tensioning band (30, 230), configured to be associated to said flexible gasket sheet (20);
- a group for closing the kit and tensioning (15) said flexible support and tensioning band (30, 230), comprising:
a first elongated element (40) and a second elongated element (50, 150, 250) comprising or consisting of an elongated body (41, 51); and
tightening members (70) configured to be associated to the first (40) and to the second elongated element (50, 150, 250) and to bring the first (40) and the second elongated element (50, 150, 250) closer to one another by tensioning said flexible support and tensioning band (30, 230);
wherein said flexible support and tensioning band (30, 230) comprises:
an interaction section (33a) with said flexible gasket sheet (20), and
a connection section (33b) with said first elongated element (40) and a connection section (33c) with said second elongated element (50, 150, 250), said connection sections (33b, 33c) each comprising at least one connection zone (37, 38) configured to be associated to said first elongated element (40) and, respectively, to said second elongated element (50, 150, 250);
wherein said flexible support and tensioning band (30, 230) comprises at least one layer (32, 32a, 32b) made of a composite material comprising a thermoplastic or thermosetting polymer matrix in which reinforcing fibres (34a, 34b, 34c) are embedded;
wherein said polymer matrix has a compressive elastic modulus, measured according to ASTM D695, comprised between 0.3 GPa and 6 GPa, preferably between 0.5 GPa and 4.5 GPa, more preferably between 0.7 GPa and 3 GPa, and
wherein said reinforcing fibres are continuous or long fibres and have a tensile modulus of elasticity, measured according to ASTM C1557, greater than, or equal to, 20 GPa, preferably greater than, or equal to, 40 GPa, more preferably greater than, or equal to, 50 GPa.

2. Kit (10) according to claim 1, wherein said polymer matrix is a thermoplastic polymer matrix comprising or consisting of one or more of the following materials: polypropylene (PP), polyethylene (PE), in particular high density or medium density polyethylene (HDPE, MDPE), polyethylene terephthalate (PET), acrylonitrile-butadiene-styrene (ABS), polycarbonate (PC), polyamide (PA), polysulphone (PSU).

3. Kit (10) according to claim 1, wherein said polymer matrix is a thermosetting polymer matrix comprising or consisting of an epoxy resin or of an unsaturated polyester resin.

4. Kit (10) according to any one of the preceding claims, wherein said reinforcing fibres (34a, 34b, 34c) are glass fibres or fibres of ultra-high molecular weight polyethylene (UHMWPE).

5. Kit (10) according to any one of the preceding claims, wherein said at least one layer (32, 32a, 32b) made of a composite material comprising a thermoplastic or thermosetting polymer matrix, has a thickness comprised between 0.1 mm and 2.5 mm, preferably between 0.2 mm and 2 mm, more preferably between 0.3 mm and 1.5 mm.

6. Kit (10) according to any one of the preceding claims, wherein said flexible support and tensioning band (30, 230) comprises:
- a first plurality of reinforcing fibres (34a) of the composite material, preferably parallel to each other, embedded in said polymer matrix and obliquely oriented at least in part with respect to a longitudinal axis (A1) of the flexible support and tensioning band (30, 230) by an angle preferably comprised between 10° and 60°, and a second plurality of reinforcing fibres (34b) preferably parallel to each other, embedded in said polymer matrix and obliquely oriented at least in part with respect to the longitudinal axis (A1) of the flexible support and tensioning band (30, 230), by an angle preferably comprised between 10° and 60° with an inclination opposite to that of the first plurality of reinforcing fibres (34a); and preferably
- a plurality of reinforcing fibres (34c) embedded in said polymer matrix and oriented substantially in parallel with respect to a longitudinal axis (A1) of said flexible support and tensioning band (30, 230), at least in proximity of opposite transversal edges (31) of said flexible support and tensioning band (30, 230).

7. Kit (10) according to any one of the preceding claims, wherein said flexible support and tensioning band (30, 230) further comprises at least one polymeric film (35a, 35b), preferably comprising or consisting of one or more of the following materials: polyethylene, polypropylene, Ethylene Vinyl Acetate (EVA), SBR rubber, EPDM rubber, silicone rubber, polyurethane, or other thermoplastic elastomers, applied on an outer face of said at least one layer (32, 32a, 32b) made of a composite material, said polymeric film (35a, 35b) preferably having a thickness comprised between 40 µm and 1000 µm and preferably having a compressive elastic modulus, measured according to ASTM D695, lower than 2.5 GPa, more preferably lower than 1.8 GPa, more preferably lower than 1.5 GPa or a hardness according to standard Shore A greater than 30, more preferably greater than 40, even more preferably greater than 50.

8. Kit (10) according to any one of the preceding claims, wherein the connection zone (37, 38) of said flexible support and tensioning band (30, 230) to said first (40) and/or to said second elongated element (50, 150, 250) consists of at least one substantially loop-shaped portion (37a, 38a) of the connection zone (37, 38) of the flexible support and tensioning band (30, 230).

9. Kit (10) according to any one of the preceding claims, further comprising an abutting elongated element (80, 180) configured to be externally associated to said first (40) and/or said second elongated element (50, 150) and to cooperate in an abutment manner with said first (40) and/or said second elongated element (50, 150) to clamp said flexible support and tensioning band (30) by means of said tightening members (70), wherein said first (40) and/or said second elongated element (50) preferably has a substantially circular cross-section and wherein said abutting elongated element (80) preferably comprises a recess (84) having a shape substantially mating an outer surface of said first (40) and/or said second elongated element (50), and wherein at least a portion of an outer surface of said first elongated element (40) and/or of said second elongated element (150) and/or of said abutting elongated element (180) preferably comprises a plurality of recesses (154, 184), corrugations or is substantially knurled.

10. Kit (10) according to claim 9, wherein said first (40) and/or said second elongated element (150) has a substantially semicircular section, wherein said abutting elongated element (180) has a substantially semicircular section and wherein a substantially flat face (153) of said first (40) and/or of said second elongated element (150) is configured to cooperate in an abutment manner with a substantially flat face (183) of said abutting elongated element (180) to clamp said flexible support and tensioning band by means of said tightening members.

11. Kit (10) according to any one of the preceding claims, wherein said tightening members (70) comprise a plurality of tightening bolts (72) or screws, and wherein said first elongated element (40) and said second elongated element (50, 150, 250) comprise a corresponding plurality of through openings (42, 52) configured to house said bolts (72) or said screws, and wherein, preferably, said group for closing the kit and tensioning said flexible support and tensioning band further comprises at least one compression spring (75), preferably a Belleville spring (75), configured to be mounted between a head of at least one of said tightening screws, a head (72a) of at least one of said bolts (72) or a tightening nut (74) of at least one of said bolts (72), and said first (40) and/or said second elongated element (50, 150, 250).

12. Kit (10) according to claim 11, further comprising at least one slider (179) slidably mounted on a shank (72b) of at least one of said tightening screws or at least one of said bolts (72), and configured to associate said screw or said bolt (72) to said first elongated element (40) and/or to said second elongated element (50, 150, 250).

13. Method for repairing a damaged pipe (90) for fluids by means of a kit (10) according to any one of the preceding claims, comprising the steps of:
- providing a pre-assembled group comprising:
said flexible support and tensioning band (30, 230) associated to a first elongated element (40) at a respective connection zone (37),
said flexible gasket sheet (20) associated to a face of said flexible support and tensioning band (30, 230) configured to face, in use, the pipe (90),
- wrapping around the outer surface (91) of said pipe (90) said flexible support and tensioning band (30, 230) with said flexible gasket sheet (20) associated thereto;
- folding an excess portion of said flexible support and tensioning band (30, 230) around a second elongated element (50, 150, 250);
- applying an initial traction on the excess portion of said flexible support and tensioning band (30, 230) to adapt a length of the flexible support and tensioning band (30, 230) wrapped around the outer surface (91) of said pipe (90) to an outer diameter of the pipe (90);
- bringing the first (40) and the second elongated element (50, 150, 250) closer to each other by means of said tightening members (70), so as to apply a second traction to said flexible support and tensioning band (30, 230) wrapped around the outer surface (91) of said pipe (90) and subjecting to compression the flexible gasket sheet (20) interposed between the flexible support and tensioning band (30, 230) and the pipe (90).

14. Method according to claim 13, wherein applying said first traction on the excess portion of the flexible support and tensioning band (30, 230) comprises wrapping at least in part said excess portion of said flexible support and tensioning band (30, 230) around said second elongated element (50, 150, 250) and wherein, preferably, applying said first traction on the excess portion of the flexible support and tensioning band (30) further comprises running at least in part said excess portion of said flexible support and tensioning band (30) around an abutting elongated element (80, 180) externally associated to said second elongated element (50, 150).

15. Method according to claim 14, wherein said first (40) and/or said second elongated element (250) comprises a substantially cylindrical inner core (252) on which a tubular shell (254) is rotatably mounted to which an end portion of said flexible support and tensioning band (230) is fixed, and wherein wrapping said excess portion of said flexible support and tensioning band (230) around said second elongated element (250) comprises rotating said tubular shell (254) about a longitudinal axis (C) of said second elongated element (250).
